(19) Europäisches Patentamt
European Patent Office
Office européen des brevets

(11) **EP 3 454 512 B1**

(12) **FASCICULE DE BREVET EUROPEEN**

(45) Date de publication et mention de la délivrance du brevet:
**13.05.2020 Bulletin 2020/20**

(51) Int Cl.:
*H04L 12/933* (2013.01)   *H04L 29/08* (2006.01)

(21) Numéro de dépôt: **18193594.1**

(22) Date de dépôt: **11.09.2018**

(54) **RÉSEAU DE COMMUNICATION, SYSTÈME DE MESURE, MOYEN DE TRANSPORT ET PROCÉDÉ DE CONSTRUCTION D'UN RÉSEAU DE COMMUNICATION ASSOCIÉS**

KOMMUNIKATIONSNETZ, ENTSPRECHENDES MESSSYSTEM, TRANSPORTMITTEL UND ERSTELLUNGSVERFAHREN EINES KOMMUNIKATIONSNETZES

COMMUNICATION NETWORK, ASSOCIATED MEASUREMENT SYSTEM, TRANSPORT MEANS AND METHOD FOR CONSTRUCTING A COMMUNICATION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2017 FR 1700912**

(43) Date de publication de la demande:
**13.03.2019 Bulletin 2019/11**

(73) Titulaire: **Thales**
**92400 Courbevoie (FR)**

(72) Inventeurs:
• **SEGURA, Eric**
**78851 Elancourt (FR)**
• **JULIÉ, Jean-Jacques**
**78851 Elancourt (FR)**

(74) Mandataire: **Lavoix**
**2, place d'Estienne d'Orves**
**75441 Paris Cedex 09 (FR)**

(56) Documents cités:
• **DAVE BUCKLEY: "New Monitoring Paradigms for Modern Avionics Buses", INTERNATIONAL TELEMETERING CONGRESS, 1 octobre 2013 (2013-10-01), pages 1-9, XP055482798,**
• **BRIAN GERY: "A FLEXIBLE SWITCHING ARCHITECTURE FOR DIVERSE SIGNAL TYPES", INTERNATIONAL TELEMETERING CONGRESS, 1 octobre 2007 (2007-10-01), XP055483284,**

**Description**

La présente invention concerne un réseau de communication du type s'étendant entre une pluralité de blocs d'entrée et une pluralité de blocs de sortie, chaque bloc d'entrée comprenant un nombre prédéterminé P1 de ports d'entrée, le nombre prédéterminé P1 de ports d'entrée étant un multiple du nombre N1 de blocs d'entrée et étant strictement supérieur à 1, chaque bloc de sortie comprenant un nombre P2 de ports de sorties supérieur ou égal au nombre prédéterminé P1 de ports d'entrée, le réseau comprenant une pluralité de commutateurs, chaque commutateur comprenant une première et une deuxième bornes d'entrée et une première et une deuxième bornes de sortie et étant propre à relier les première et deuxième bornes d'entrée respectivement aux première et deuxième bornes de sortie, ou inversement, en fonction d'un signal de commande respectif reçu par le commutateur.

La présente invention concerne également un système de mesure notamment pour moyens de transport, appelés génériquement porteurs, pouvant par exemple être notamment un aéronef, comprenant un tel réseau de communication.

La présente invention concerne également un moyen de transport, appelé génériquement porteur, tel qu'un aéronef, comprenant un tel système de mesure et un procédé de construction d'un tel réseau de communication.

Dans le domaine des réseaux de communication et notamment des réseaux de communication pour porteurs ou moyens de transport, il est connu d'utiliser des réseaux de communication reliant des blocs d'entrée, correspondant par exemple à des capteurs de mesure, à des blocs de sortie, correspondant par exemple à des calculateurs propres à traiter des données mesurées transmises par les capteurs de mesure. De telles données mesurées sont, par exemple, des données relatives à l'environnement du porteur et notamment à l'environnement électromagnétique du porteur. La présente invention est particulièrement applicable à la transmission de signaux numériques dits bruts issus des capteurs de mesure. Les signaux numériques comprennent par exemple des échantillons de données mesurées par des capteurs de type Radar ou d'écoute électromagnétique ou des flux vidéos bruts.

Un exemple de ce type de réseaux est fourni par la publication "New monitoring paradigms for modem avionics buses" de D. Buckley au Congrès International de Télémétrie de 2013.

Un autre exemple est fourni par la publication "A flexible switching architecture for diverse signal types" de B. Gery au Congrès International de Télémétrie de 2007.

De tels réseaux de communication sont relativement complexes afin de garantir notamment une certaine résistance aux pannes ou indisponibilités de certains blocs de sortie et une possibilité d'adaptation à une évolution du débit de sortie des blocs d'entrée en cas notamment d'évolution des performances des capteurs. Ces réseaux de communication permettent cependant d'assurer le routage de données entre les blocs d'entrée et les blocs de sortie de manière sécuritaire.

Il est notamment connu d'utiliser des réseaux de communication comprenant des matrices de routage dites systématiques, propres à router n'importe quel flux de données mesurées par un capteur de mesure vers n'importe quel calculateur. De telles matrices de routage comprennent plusieurs étages de commutateurs reliés entre eux, avec chaque commutateur, également appelé cross-bar, qui comprend une première et une deuxième bornes d'entrée et une première et une deuxième bornes de sortie. Chaque commutateur est propre à relier les première et deuxième bornes d'entrée respectivement aux première et deuxième bornes de sortie ou inversement en fonction d'un signal de commande reçu par le commutateur.

Dans de tels réseaux de communication, afin de les adapter à une évolution du débit de sortie des capteurs de mesure, il est connu de dupliquer la matrice de routage et de connecter en parallèle une pluralité de matrices de routage aux capteurs de mesure et aux calculateurs.

Cependant, de tels réseaux de communication ont une architecture complexe, conduisant notamment à des pertes d'énergie importantes à travers le réseau de communication et assurent une résistance aux pannes, notamment de commutateurs, limitée.

C'est à ces inconvénients qu'entend remédier l'invention en proposant un réseau de communication ayant une architecture simplifiée, limitant l'impact d'une indisponibilité d'un commutateur sur le fonctionnement du réseau et restant robuste aux pannes ou indisponibilités des blocs de sorties et à une évolution du débit de sortie des blocs d'entrée.

A cet effet, l'invention a pour objet un réseau de communication conforme à la revendication 1.

Grâce à l'invention le nombre de commutateurs du réseau de communication est minimisé et un seul étage de commutateurs est utilisé entre les blocs d'entrée et les blocs de sortie. Ainsi, l'architecture du réseau est simplifiée, et l'impact d'une indisponibilité d'un commutateur sur le fonctionnement du réseau est limité, car il n'existe pas de commutateurs dont une indisponibilité entrainerait une indisponibilité de communication avec un bloc d'entrée ou un bloc de sortie. En outre, la façon dont les commutateurs sont reliés aux différents blocs d'entrée et de sortie permet d'assurer que le réseau de communication reste robuste aux pannes ou indisponibilités des blocs de sorties et à une évolution de débit d'un flux de données transmis par les blocs d'entrée.

Suivant des modes particuliers de réalisation, l'invention présente l'une ou plusieurs des caractéristiques des revendications 2 à 5, prise(s) isolément ou suivant toute combinaison techniquement admissible.

L'invention a également pour objet un système de mesure conforme à l'une quelconque des revendications 6 à 8.

L'invention a, en outre, pour objet un porteur, notamment un aéronef, qui comprend un système de mesure tel que défini ci-dessus.

L'invention a également pour objet un procédé de construction conforme à la revendication 10 ou 11.

L'invention sera mieux comprise à l'aide de la description qui va suivre, donnée uniquement à titre d'exemple non limitatif et faite en se référant aux dessins annexés sur lesquels :

- la figure 1 est une représentation schématique partielle d'un moyen de transport ou porteur, notamment un aéronef, comprenant un système de mesure incluant un premier exemple d'un réseau de communication conforme à l'invention;
- la figure 2, est une représentation schématique d'une configuration du réseau de communication de la figure 1 dans un premier mode de fonctionnement du système de mesure ;
- la figure 3 est une représentation schématique simplifiée de la configuration du réseau de communication de la figure 1, dans un deuxième mode de fonctionnement du système de mesure,
- la figure 4 est une représentation schématique simplifiée de la configuration du réseau de communication de la figure 1, dans un troisième mode de fonctionnement du système de mesure,
- la figure 5 est une représentation schématique simplifiée de la configuration du réseau de communication de la figure 1, dans un quatrième mode de fonctionnement du système de mesure,
- la figure 6 est une représentation schématique d'un système de mesure incluant un deuxième exemple d'un réseau de communication conforme à l'invention; et
- la figure 7 est un organigramme d'un procédé de construction d'un réseau de communication conforme à l'invention.

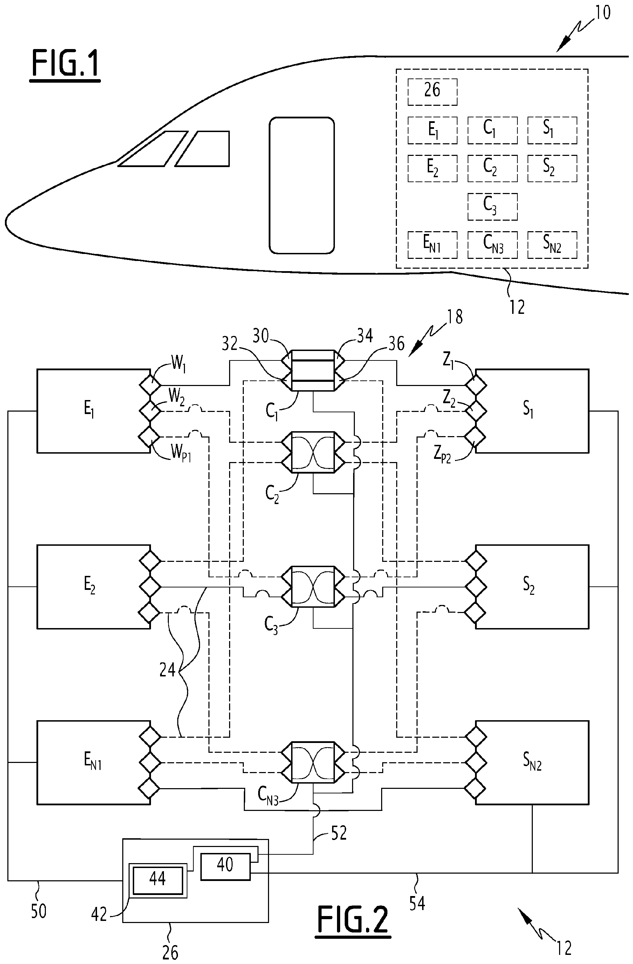

Le moyen de transport 10, également appelé porteur, représenté à la figure 1 correspond à un aéronef et est appelé aéronef ou porteur par la suite.

En variante, le porteur 10 est un véhicule autre qu'un aéronef, tel qu'un véhicule terrestre, marin ou sous-marin et notamment un train, une voiture ou un bateau.

Le porteur 10 comprend un système de mesure 12 représenté plus en détails aux figures 2 à 5, propre à déterminer des paramètres relatifs à l'environnement dans lequel évolue le porteur, c'est-à-dire l'aéronef dans notre exemple.

Dans l'exemple de la figure 1, l'aéronef est par exemple un avion.

Les paramètres relatifs à l'environnement du porteur, c'est-à-dire de l'aéronef, sont notamment des paramètres relatifs à l'environnement électromagnétique du porteur. Les paramètres relatifs à l'environnement du porteur sont, par exemple, des paramètres indiquant la détection, la localisation et l'identification d'objets autour du porteur.

Le système de mesure 12 comprend une pluralité de blocs d'entrée $E_1,..., E_{N1}$, une pluralité de blocs de sortie $S_1,..., S_{N2}$ et un réseau de communication 18 s'étendant entre les blocs d'entrée $E_1,..., E_{N1}$ et les blocs de sortie $S_1,..., S_{N2}$.

Plus précisément, le système de mesure 12 comprend un nombre N1 de blocs d'entrée $E_1,..., E_{N1}$ et un nombre N2 de blocs de sortie $S_1,..., S_{N2}$.

Avantageusement, le nombre N1 de blocs d'entrée $E_1,..., E_{N1}$ est égal au nombre N2 de blocs de sortie $S_1,..., S_{N2}$.

Chaque bloc d'entrée $E_1,..., E_{N1}$ comprend un nombre prédéterminé P1 de ports d'entrée $W_1,...,W_{P1}$ qui est un multiple du nombre N1 de blocs d'entrée $E_1,..., E_{N1}$ et est strictement supérieur à 1.

Chaque bloc d'entrée $E_1,..., E_{N1}$ est propre à transmettre sur chaque port d'entrée un flux de données d'entrée ayant un débit d'entrée prédéterminé $q_1,..., q_{N1}$. Le débit d'entrée prédéterminé est propre à être différent pour chaque port d'entrée, toutefois, dans l'exemple considéré chaque bloc d'entrée $E_1,..., E_{N1}$ est propre à transmettre le même flux de données d'entrée respectif avec le même débit d'entrée sur chacun de ses ports d'entrée $W_1,...,W_{P1}$. Le nombre P1 de ports d'entrée pour chaque bloc d'entrée correspond alors au nombre de duplications possible du flux de données d'entrée. Les ports d'entrée $W_1,...,W_{P1}$ permettent d'assurer une redondance dans la transmission des données d'entrée aux blocs de sortie $S_1,..., S_{N2}$.

Les blocs d'entrée $E_1,..., E_{N1}$ sont, par exemple, des capteurs de mesure, tels que des capteurs de type vidéo ou radar ou d'écoute électromagnétique, propres à mesurer des données relatives à l'environnement du porteur et notamment à l'environnement électromagnétique du porteur. Les données mesurées sont, par exemple, des signaux numériques dits bruts issus des capteurs de mesure. Les signaux numériques comprennent par exemple des échantillons de données mesurées par des capteurs de type Radar ou d'écoute électromagnétique ou des flux vidéos bruts mesurés par des capteurs vidéos.

Chaque bloc de sortie $S_1,..., S_{N2}$ comprend un nombre P2 de ports de sorties $Z_1,..., Z_{P2}$ supérieur ou égal au nombre prédéterminé P1 de ports d'entrée $W_1,...,W_{P1}$.

Chaque bloc de sortie $S_1,..., S_{N2}$ est propre à recevoir un flux de données de sortie ayant un débit de sortie maximal $Q_1,..., Q_{N2}$. Pour chaque bloc de sortie $S_1,..., S_{N2}$, le débit de sortie maximal associé vérifie l'inéquation, $Q_i \geq$

$A \times q_M + R$, avec i un indice représentatif du bloc de sortie considéré, avec $q_M$ un maximum des débits d'entrée prédéterminés $q_1,..., q_{N1}$, A un entier strictement supérieur à 1 et R un réel strictement inférieur à $q_M$.

Avantageusement, chaque port de sortie $Z_1,..., Z_{P2}$ est propre à recevoir un flux de données ayant un débit maximal $Q'_{1,u},..., Q'_{N2,u}$ vérifiant l'inéquation, $Q'_{i,u} \geq q_M$, , avec i un indice représentatif du bloc de sortie considéré $S_1,..., S_{N2}$ et u un indice représentatif du port de sortie considéré.

Avantageusement encore, le système de mesure 12 est dimensionné et/ou les échanges dans le réseau de communication 18 sont temporisés de sorte qu'à chaque instant on a toujours : $\displaystyle\sum_{j=1}^{N_1} q_j < \sum_{i=1}^{N_2} Q_i$ , de préférence

$$\sum_{j=1}^{N_1} A \times q_j < \sum_{i=1}^{N_2} Q_i \text{ avec } \sum_{j=1}^{N_1} (A+1) \times q_j > \sum_{i=1}^{N_2} Q_i .$$

Avantageusement encore, l'entier A est inférieur ou égal au nombre prédéterminé P1 de ports d'entrée $W_1,...,W_{P1}$, de préférence égal au nombre prédéterminé P1 de ports d'entrée. En répartissant de manière uniforme le débit d'entrée de chaque bloc d'entrée entre A ports d'entrée, chaque port de sortie de chaque bloc de sortie pourra avantageusement recevoir le débit de n'importe quel port d'entrée de n'importe quel bloc d'entrée.

Dans l'exemple des figures 2 à 5, le nombre N1 de blocs d'entrée est égal au nombre N2 de blocs de sortie et est égal à 3, tandis que le nombre P1 de ports d'entrée est égal au nombre P2 de ports de sortie et est égal à 3.

Avantageusement le nombre N1 de blocs d'entrée est supérieur ou égal à 3, de préférence supérieur ou égal à 4.

Les blocs de sortie $S_1,..., S_{N2}$ sont, par exemple, des organes de calcul, également appelés calculateurs, propres à déterminer les paramètres relatifs à l'environnement du porteur, c'est-à-dire de l'aéronef dans l'exemple de la figure 1, en fonction des données transmises par les blocs d'entrée $E_1,..., E_{N1}$ aux blocs de sortie $S_1,..., S_{N2}$ via le réseau de communication 18.

Le réseau de communication 18 comprend une pluralité de commutateurs $C_1,..., C_{N3}$, des liaisons de données 24 reliant entre eux les commutateurs, les blocs d'entrée et les blocs de sortie et un système 26 de commande des commutateurs.

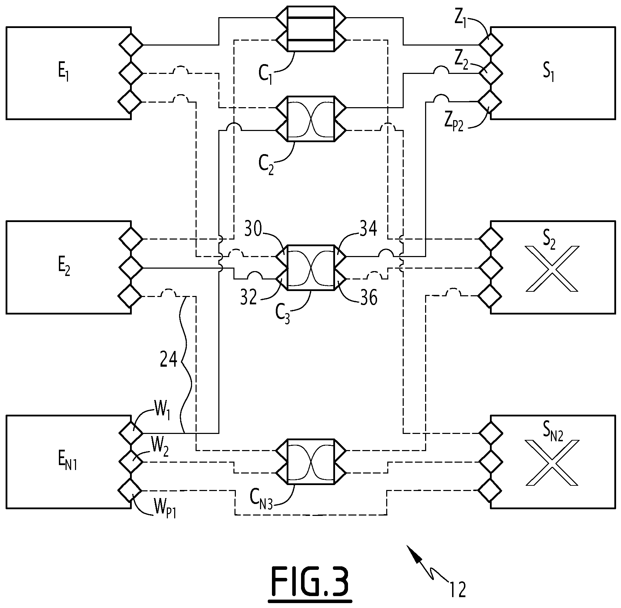

Il est à noter que le système de commande 26 n'est pas représenté sur les figures 3 à 5 pour des raisons de simplification des dessins.

Le réseau de communication 18 comprend un nombre N3 de commutateurs.

Chaque commutateur $C_1,..., C_{N3}$ comprend une première 30 et une deuxième 32 bornes d'entrée et une première 34 et une deuxième 36 bornes de sortie.

Chaque commutateur $C_1,..., C_{N3}$ est propre à relier les première et deuxième bornes d'entrée respectivement aux première et deuxième bornes de sortie, ou inversement, en fonction d'un signal de commande respectif reçu par le commutateur.

En d'autres termes, chaque commutateur $C_1,..., C_{N3}$ est propre à relier les première et deuxième bornes d'entrée respectivement aux première et deuxième bornes de sortie, ou les première et deuxième bornes d'entrée respectivement aux deuxième et première bornes de sortie, en fonction d'un signal de commande respectif reçu par le commutateur.

Lorsqu'une borne d'entrée 30, 32 est reliée à une borne de sortie 34, 36, la borne d'entrée 30, 32 est propre à transmettre à la borne de sortie 34, 36 le flux de données d'entrée qu'elle reçoit en provenance de l'un des ports d'entrée $W_1,...,W_{P1}$ auquel elle est reliée par l'une des liaisons de données 24.

Le nombre N3 de commutateurs est fonction en plus du nombre N1 de blocs d'entrée, du nombre P1 de ports d'entrée.

Lorsque le nombre prédéterminé P1 de ports d'entrée est impair, comme cela est par exemple représenté sur les figures 2 à 5 où le nombre de ports d'entrée est égal à 3, le nombre N3 de commutateurs est égal à :

$$\text{N3} = \frac{N1}{P1} \times \frac{P1^2 - 1}{2} . \qquad\qquad (1)$$

Ainsi, dans l'exemple des figures 2 à 5, le nombre de commutateurs est égal à 4.

Lorsque le nombre prédéterminé P1 de ports d'entrée est pair, le nombre de commutateurs est égal à :

$$N3 = N1 \times \frac{P1}{2} \ . \hspace{3cm} (2)$$

Les liaisons de données 24 relient chacune respectivement une borne d'entrée 30, 32 à un port d'entrée $W_1,...,W_{P1}$ ou une borne de sortie 34, 36 à un port de sortie $Z_1,..., Z_{P2}$ ou un port d'entrée $W_1,...,W_{P1}$ à un port de sortie $Z_1,..., Z_{P2}$.

En d'autres termes, chaque port d'entrée $W_1,...,W_{P1}$ est connecté respectivement à une seule des liaisons de données 24, chaque port de sortie $Z_1,..., Z_{P2}$ est connecté respectivement à une seule des liaisons de données 24 et chaque borne d'entrée ou de sortie est connecté respectivement à une seule des liaisons de données 24.

Les liaisons de données 24 sont des liaisons physiques point à point.

Dans la suite de la description on entend par port d'entrée libre respectivement port de sortie libre, un port d'entrée respectivement de sortie non encore relié à une liaison de données 24. Inversement, on qualifie de non-libre un port d'entrée ou de sortie déjà relié à une liaison de données 24.

De même on entend par borne d'entrée libre respectivement borne de sortie libre, une borne d'entrée respectivement de sortie non encore reliée à une liaison de données 24. Inversement, on qualifie de non-libre une borne d'entrée ou de sortie déjà reliée à une liaison de données 24.

Le réseau de communication 18 vérifie, lorsque le nombre P1 de ports d'entrée est impair, que pour $\frac{N1}{P1}$ blocs d'entrée, l'un des ports d'entrée $W_{P1}$ dudit bloc d'entrée $E_{N1}$ est relié directement via une liaison de données respective 24 à l'un des ports de sortie $Z_{P2}$ d'un bloc de sortie $S_{N2}$ respectif. On entend par bloc de sortie respectif qu'un bloc de sortie différent est relié directement via une liaison de données 24 à chaque $\frac{N1}{P1}$ blocs d'entrée.

Ainsi, dans l'exemple des figures 2 à 5, le bloc d'entrée $E_{N1}$ a un de ses ports d'entrée $W_{P1}$ relié directement via une liaison de données 24 au port de sortie $Z_{P2}$ du bloc de sortie $S_{N2}$, c'est-à-dire sans qu'un commutateur soit positionné entre ledit port d'entrée $W_{P1}$ et ledit port de sortie $Z_{P2}$.

Le réseau de communication 18 vérifie également que pour chaque commutateur $C_1,..., C_{N3}$, la première 30 et la deuxième 32 bornes d'entrée sont chacune reliées directement via une liaison de données respective 24 à des blocs d'entrée $E_1,..., E_{N1}$ différents et la première 34 et la deuxième 36 bornes de sortie sont chacune reliées directement via une liaison de données respective à des blocs de sortie $S_1,..., S_{N2}$ différents.

Plus précisément, le réseau de communication 18 vérifie que pour chaque commutateur, la première 30 et la deuxième 32 bornes d'entrée sont chacune reliées à l'un des ports d'entrée des blocs d'entrée et la première 34 et la deuxième 36 bornes de sortie sont chacune reliées à l'un des ports de sortie $Z_1,..., Z_{P2}$ des blocs de sortie.

La structure du réseau de communication 18 et notamment l'implémentation des liaisons de données 24 entre les commutateurs $C_1,..., C_{N3}$, les blocs d'entrée $E_1,..., E_{N1}$ et les blocs de sortie $S_1,..., S_{N2}$ sera expliquée plus en détails ci-dessous. Dans la description ci-dessous les références des éléments décrits sont données seulement à titre indicatif, afin de faciliter la compréhension et afin de décrire un mode de réalisation spécifique, mais non limitatif de l'invention, en s'appuyant sur les figures 2 à 5. Toutefois la description s'applique quelle que soit la référence des commutateurs, blocs d'entrée et blocs de sortie.

Plus précisément, en numérotant les blocs d'entrée $E_1,..., E_{N1}$ avec un indice j représentatif du bloc d'entrée considéré et les blocs de sorties $S_1,..., S_{N2}$ avec l'indice i, le réseau de communication 18 respecte les règles de connexion suivantes pour chaque bloc d'entrée numéroté de 1 à N1 considéré successivement, afin de relier entre eux les blocs d'entrée, les blocs de sortie et les commutateurs via les liaisons de données 24 :

- si k, le reste de la division euclidienne de l'indice j du bloc d'entrée par le nombre prédéterminé P1 de ports d'entrée est égal à 1 :

    + un premier groupe de P1 commutateurs $C_1$, $C_2$, $C_3$ non-reliés à des blocs d'entrée $E_1,..., E_{N1}$ et de sortie $S_1,..., S_{N2}$ est sélectionné,
    + les P1 ports d'entrée $W_1,...,W_{P1}$ du bloc d'entrée $E_1$ sont reliés respectivement à l'une des bornes d'entrée 30 de l'un des commutateurs respectif $C_1$, $C_2$, $C_3$ du premier groupe,
    + l'une des bornes de sortie 34 de chacun des commutateurs $C_1$, $C_2$, $C_3$, du premier groupe est reliée respectivement à l'un des ports de sortie $Z_1,..., Z_{P2}$ du bloc de sortie $S_1$ ayant un indice i égal à l'indice j du bloc d'entrée, et
    + l'autre borne de sortie de P1-1 commutateurs $C_1$, $C_2$ du premier groupe est reliée respectivement à l'un des ports de sortie $Z_1$ d'un bloc de sortie $S_2$, $S_{N2}$ respectif choisi parmi P1-1 blocs de sortie $S_1,..., S_{N2}$ ayant un indice i strictement supérieur à l'indice j du bloc d'entrée et inférieur ou égal à j+P1 - 1,

- si k, le reste de la division euclidienne de l'indice j du bloc d'entrée par P1 est strictement supérieur à 1 :

  + un des commutateurs $C_1$, ayant une seule borne d'entrée 32 libre et ses deux bornes de sortie 34, 36 reliées respectivement à un premier bloc de sortie $S_2$ relié lui-même à seulement k-1 commutateurs et à un deuxième bloc de sortie $S_1$ relié lui-même à P1 commutateurs est identifié,
  + la borne d'entrée libre 32 du commutateur identifié est reliée à l'un des ports d'entrée $W_1$ du bloc d'entrée $E_2$,
  + si k > 2, une borne d'entrée libre de chacun des commutateurs $C_1$,..., $C_{N3}$, autre que le commutateur identifié, qui a une borne de sortie reliée au premier bloc de sortie est reliée à l'un des ports d'entrée $W_1$,...,$W_{P1}$ du bloc d'entrée $E_2$,
  + si k est pair, un commutateur $C_3$ a une seule borne de sortie libre 36 et est repéré, la borne de sortie 36 du commutateur $C_3$ repéré est alors reliée au premier bloc de sortie et une borne d'entrée 32 du commutateur repérée est reliée à l'un des ports d'entrée $W_2$ du bloc d'entrée $E_2$ ayant l'indice j, + si k est pair et k>2, un deuxième groupe de P1-1-(k-2)-1 commutateurs $C_1$,..., $C_{N3}$, non-reliés à des blocs d'entrée et de sortie est sélectionné, tandis que si k est pair et k≤2, un deuxième groupe de P1-2 commutateurs $C_{N3}$ non-reliés à des blocs d'entrée et de sortie est sélectionné, et que si k est impair et k>2, un deuxième groupe de P1-1-(k-2) commutateurs non-reliés à des blocs d'entrée et de sortie est sélectionné et que si k est impair et k≤2, un deuxième groupe de P1-1 commutateurs non-reliés à des blocs d'entrée et de sortie est sélectionné, et
  + l'une des bornes d'entrée 30 de chaque commutateur $C_{N3}$ du deuxième groupe est reliée respectivement à l'un des ports d'entrée $W_{P1}$ du bloc d'entrée $E_2$ et l'une des bornes de sortie 34 de chaque commutateur $C_{N3}$ du deuxième groupe est reliée respectivement à l'un des ports de sortie $Z_{P2}$ du premier bloc de sortie $S_2$, et un port de sortie libre de chaque bloc de sortie $S_{N2}$ ayant uniquement k-1 ports de sortie non-libres est relié respectivement à une des bornes de sorties libre 36 des commutateurs $C_{N3}$ du deuxième groupe,

- si k, le reste de la division euclidienne de l'indice j du bloc d'entrée par P1 est égal à 0 :

  + un des commutateurs $C_2$, ayant une seule borne d'entrée libre et ses deux bornes de sortie reliées respectivement à un troisième bloc de sortie $S_{N2}$ déjà relié lui-même à P1-1 commutateurs et à un quatrième bloc de sortie $S_1$ déjà relié lui-même à P1 commutateurs est choisi,
  + la borne d'entrée libre 32 du commutateur $C_2$ choisi est reliée à l'un des ports d'entrée $W_1$ du bloc d'entrée $E_{N1}$,
  + Si P1> 2, une borne d'entrée 32 libre de chacun des commutateurs $C_{N3}$, autre que le commutateur choisi $C_2$, qui a une borne de sortie 34 reliée au troisième bloc de sortie est reliée à l'un des ports d'entrée $W_2$ du bloc d'entrée $E_{N1}$,
  + si P1 est pair, un commutateur ayant une seule borne d'entrée libre et une seule borne de sortie libre a sa borne d'entrée libre qui est reliée à l'un des ports d'entrée $W_1$,...,$W_{P1}$ du bloc d'entrée et sa borne de sortie libre qui est reliée à l'un des ports de sortie $Z_1$,..., $Z_{P2}$ du troisième bloc de sortie .
  + si P1 est impair, l'un des ports d'entrée $W_{P1}$ du bloc d'entrée $E_{N1}$ est directement relié à l'un des ports de sortie $Z_{P2}$ du troisième bloc de sortie $S_{N2}$.

En respectant les règles énoncées ci-dessus et en fixant le nombre de ports d'entrée et de sortie égal à 3 et le nombre de blocs d'entrée et de sortie égal à 3 on obtient le réseau de communication représenté aux figures 2 à 5.

Le système de commande 26 est configuré pour transmettre le signal de commande respectif à chaque commutateur $C_1$,..., $C_{N3}$ de sorte à commander la configuration du commutateur, c'est-à-dire la façon dont les bornes d'entrée sont reliées aux bornes de sortie au sein du commutateur $C_1$,..., $C_{N3}$.

Avantageusement, le système de commande 26 comprend un dispositif 40 de détection d'une indisponibilité et/ou panne des blocs de sortie et/ou des commutateurs et un dispositif 42 de commande, propre à transmettre chaque signal de commande à chaque commutateur en fonction notamment des indisponibilités/pannes détectées par le dispositif de détection 40.

Avantageusement encore, le dispositif de commande 42 comprend une unité de calcul 44 configurée pour calculer chaque signal de commande en fonction des indisponibilités/pannes détectées par le dispositif de détection 40.

Avantageusement encore, l'unité de calcul 44 est propre à recevoir, via par exemple une liaison de transmission de données 50, des données relatives au fonctionnement de chaque bloc d'entrée $E_1$,..., $E_{N1}$ et notamment relatives au nombre de ports d'entrée de chaque bloc d'entrée transmettant des données sur le réseau de communication 18. L'unité de calcul 44 est avantageusement configurée pour calculer chaque signal de commande en fonction également des données relatives au fonctionnement de chaque bloc d'entrée $E_1$,..., $E_{N1}$.

En variante, l'unité de calcul 44 est configurée pour mémoriser le nombre de blocs d'entrée et le nombre de ports d'entrée.

Le dispositif de détection 40 est, par exemple, propre à recevoir en provenance de chaque commutateur un premier message relatif à un état de fonctionnement du commutateur $C_1$,..., $C_{N3}$ et de préférence également en provenance de chaque bloc de sortie $S_1,..., S_{N2}$ un deuxième message relatif à un état de fonctionnement du bloc de sortie.

Le dispositif de détection est, par exemple, relié à chaque commutateur via une liaison d'échange de données 52 et à chaque bloc de sortie via une liaison de communication 54.

Les figures 2 à 5 illustrent les différences de configuration des commutateurs, c'est-à-dire la façon dont sont commandés les commutateurs via leur signal de commande respectif en cas respectivement d'un premier, deuxième, troisième et quatrième modes de fonctionnement du système de mesure 12.

Sur les figures 2 à 5, les liaisons de données 24 sont représentées en traits continus lorsque des données sont transmises sur ces liaisons et en traits pointillés si aucune donnée ne transite sur ces liaisons.

Dans l'exemple de la figure 2, le système de mesure 12 est dans un premier mode de fonctionnement où l'ensemble des éléments du système de mesure 12 sont disponibles, c'est-à-dire en fonctionnement nominal, propres à échanger des données.

Dans l'exemple de la figure 2, chaque bloc d'entrée $E_1,..., E_{N1}$ est configuré pour transmettre un flux de données d'entrée seulement sur l'un de ses ports d'entrée $W_1,...,W_{P1}$.

Dans l'exemple de la figure 3, le système de mesure 12 est dans le deuxième mode de fonctionnement où deux des blocs de sortie $S_2, S_{N2}$ du système de mesure 12 sont indisponibles ou en panne.

Le dispositif de détection 40 est alors propre à détecter lesdites indisponibilités/pannes et l'unité de calcul 44 est alors propre à déterminer le signal de commande de chaque commutateur pour transmettre les données d'entrée de chaque bloc d'entrée vers le dernier bloc de sortie en fonctionnement nominal $S_1$.

En d'autres termes, le système de commande 26, commande les commutateurs $C_1,..., C_{N3}$ afin que les flux de données d'entrée soient transmis vers le seul bloc de sortie disponible $S_1$.

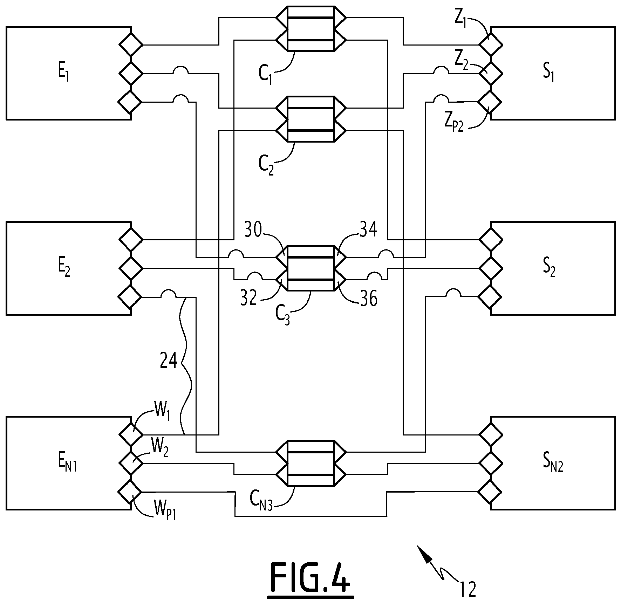

Dans le troisième mode de fonctionnement de la figure 4, les flux de données d'entrée de chaque bloc d'entrée $E_1,..., E_{N1}$ sont dupliqués deux fois pour des raisons de sécurité comparativement au premier mode de fonctionnement ou la quantité de données d'entrée transmis par chaque bloc d'entrée est triplé comparativement au premier mode de fonctionnement.

Ainsi, le système de mesure 12 est robuste aux augmentations de débit des blocs d'entrée $E_1,..., E_{N1}$ pour des raisons de redondance ou de quantité de données à transmettre.

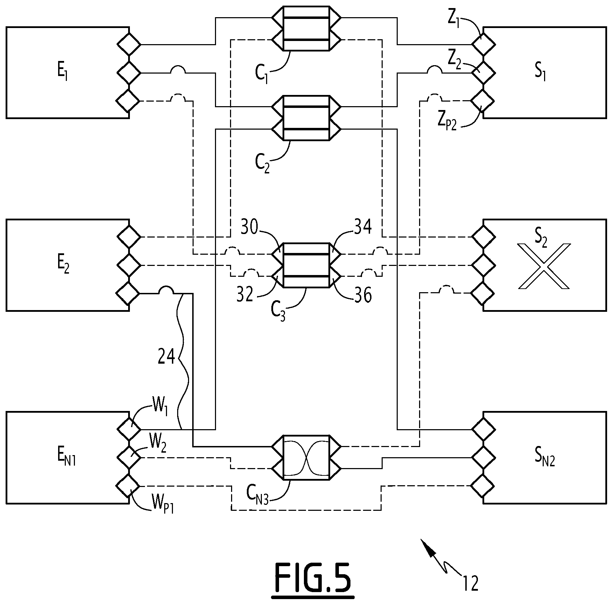

Dans le quatrième mode de fonctionnement de la figure 5, le flux de données d'entrée du bloc d'entrée $E_1$ est dupliqué une fois ou la quantité de données transmis par le bloc d'entrée $E_1$ est doublée comparativement au premier mode de fonctionnement et le calculateur $S_2$ est indisponible/en panne.

Le système de commande 26 est alors propre à modifier les signaux de commande des commutateurs $C_1,..., C_{N3}$ comparativement au premier mode de fonctionnement pour transmettre les données d'entrée de chaque bloc d'entrée vers les blocs de sortie en fonctionnement nominal S1, SN2.

En d'autres termes les figures 2 à 5 illustrent qu'en dupliquant A fois les signaux de chaque blocs d'entré, avec A >1, il est possible à l'aide du réseau de communication 18:

- d'être robuste à A-1 pannes/indisponibilités de commutateurs ou de blocs de sortie ; ou
- d'être robuste à une augmentation des débits de données en sortie de chaque bloc d'entrée et notamment à une multiplication par A des débits de données en sortie de chaque bloc d'entrée ; ou
- pour A>2, d'être robuste à A-L pannes/indisponibilités de commutateurs ou de blocs de sortie et à une augmentation des débits d'entrée de chaque bloc d'entrée multiplié par L, avec L un entier respectant l'inéquation :

$$1 \leq L \leq \left(\frac{A}{2}\right) - 1.$$

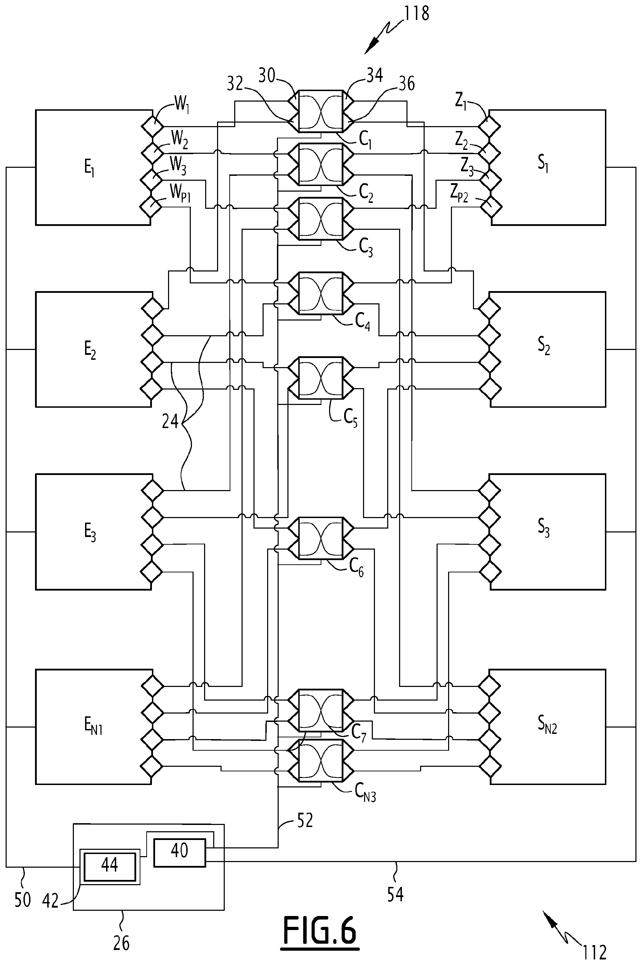

La figure 6 illustre un autre exemple d'un système de mesure 112 conforme à l'invention.

Dans la suite de la description et sur les dessins les mêmes références seront utilisées pour décrire les éléments communs entre les systèmes de mesure 12 et 112, sachant que les systèmes de mesure 12 et 112 diffèrent uniquement par le nombre de composants qu'ils utilisent, c'est-à-dire notamment le nombre de blocs d'entrée $E_1,..., E_{N1}$, le nombre de blocs de sortie $S_1,..., S_{N2}$ et le nombre de commutateurs $C_1,..., C_{N3}$.

Plus précisément, dans l'exemple de la figure 6, le nombre de blocs d'entrée N1 est égal au nombre de blocs de sortie N2 et est égal à 4, tandis que le nombre de ports d'entrée P1 est égal au nombre de ports de sortie P2 et est égal à 4.

Dans l'exemple de la figure 6, le nombre de commutateurs vérifie bien l'équation (2) donnée ci-dessus pour un nombre prédéterminé P1 de ports d'entrée pair et est égal à 8.

La figure 6 illustre bien en comparaison avec les figures 2 à 5 que le nombre de commutateurs est fonction du nombre de blocs d'entrée et de ports d'entrée.

Le système de mesure 112 comprend un réseau de communication 118 obtenu en suivant les mêmes règles que celles énoncées ci-dessus pour le réseau de communication 18.

Plus précisément, le réseau de communication 118 représenté à la figure 6 est obtenu en respectant les règles de connexion présentées pour le réseau de communication 18 et en fixant le nombre de ports d'entrée et de sortie égal à 4 et le nombre de blocs d'entrée et de sortie égal à 4.

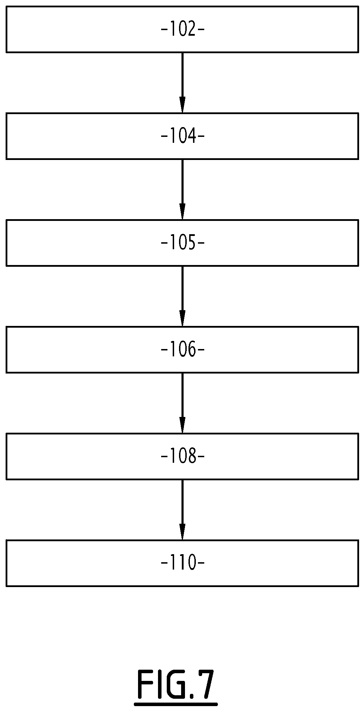

Le procédé de construction du réseau des figures 2 à 6 va désormais être présenté à l'aide de l'organigramme de la figure 7.

Le procédé comprend une première étape 102 de fourniture des N1 blocs d'entrée et des N2 blocs de sortie.

Ensuite, lors d'une deuxième étape 104 de fourniture, $N1 \times \dfrac{P1}{2}$ commutateurs sont fournis si le nombre de ports d'entrée est pair, tandis que si le nombre de ports d'entrée est impair, $\dfrac{N1}{P1} \times \dfrac{P1^2 - 1}{2}$ commutateurs sont fournis.

Ensuite, lors d'une étape de liaison 105, exécutée uniquement si le nombre P1 de ports d'entrée est impair, l'un des ports d'entrée de $\dfrac{N1}{P1}$ blocs d'entrée est relié directement via une liaison de données respective à l'un des ports de sortie d'un bloc de sortie respectif.

Puis, le procédé comprend pour chaque commutateur, une première étape 106 de connexion au cours de laquelle, les première et deuxième bornes d'entrée sont connectées directement via une liaison de données respective à des ports d'entrée libres de blocs d'entrée différents et une deuxième étape de connexion 108 au cours de laquelle, les première et deuxième bornes de sortie sont connectées directement via une liaison de données respective à des ports de sortie libres de blocs de sortie différents.

Plus précisément, en numérotant les blocs d'entrée avec l'indice j allant de 1 à N1 et les blocs de sortie avec l'indice i allant de 1 à N2, le procédé comprend lors de l'étape de liaison et des étapes de connexion des sous-étapes correspondant aux règles de connexion énoncés précédemment, réalisées pour chaque bloc d'entrée numéroté de 1 à N1 considéré successivement, afin de relier entre eux les blocs d'entrée, les blocs de sortie et les commutateurs via les liaisons de données 24.

Enfin, lors d'une étape finale 110, le système de commande 26 est relié aux commutateurs, et avantageusement aux blocs d'entrée et de sortie, afin de commander les commutateurs.

Les réseaux de communication 18, 118 présentent les mêmes avantages qui sont liés à leur architecture et à la possibilité de commander les commutateurs. Ils offrent notamment une grande robustesse aux pannes/indisponibilités de blocs de sortie ou de commutateurs et des possibilités améliorées de redondance et d'adaptation a une augmentation du débit de données fourni par les blocs d'entrée, ceci avec une complexité minimale dans la structure du réseau, notamment en termes de nombre de composants constituant le réseau.

En variante, le système de mesure 12, 112 est intégré dans un moyen de transport autre qu'un aéronef, tel qu'un train ou une voiture, un bateau ou un sous-marin.

Les modes de réalisation et variantes envisagés ci-dessus sont propres à être combinés entre eux pour donner lieu à d'autres modes de réalisation de l'invention.

**Revendications**

1. Réseau de communication (18, 118) s'étendant entre une pluralité de blocs d'entrée ($E_1$,..., $E_{N1}$) et une pluralité de blocs de sortie ($S_1$,..., $S_{N2}$),

   chaque bloc d'entrée ($E_1$,..., $E_{N1}$) comprenant un nombre prédéterminé P1 de ports d'entrée ($W_1$,...,$W_{P1}$), le nombre prédéterminé P1 de ports d'entrée étant un multiple du nombre N1 de blocs d'entrée ($E_1$,..., $E_{N1}$) et étant strictement supérieur à 1,

   chaque bloc de sortie ($S_1$,..., $S_{N2}$) comprenant un nombre P2 de ports de sorties ($Z_1$,..., $Z_{P2}$) supérieur ou égal au nombre prédéterminé P1 de ports d'entrée,

   le réseau comprenant une pluralité de commutateurs ($C_1$,..., $C_{N3}$), chaque commutateur ($C_1$,..., $C_{N3}$) comprenant une première (30) et une deuxième (32) bornes d'entrée et une première (34) et une deuxième (36) bornes de sortie et étant propre à relier les première (30) et deuxième (32) bornes d'entrée respectivement aux première (34) et deuxième (36) bornes de sortie, ou inversement, en fonction d'un signal de commande respectif reçu par le commutateur,

   **caractérisé en ce que** :

   - lorsque le nombre prédéterminé P1 de ports d'entrée est pair, le nombre N3 de commutateurs est égal à :

$$N3 = N1 \times \frac{P1}{2}\text{, et}$$

- lorsque le nombre prédéterminé P1 de ports d'entrée est impair, le nombre N3 de commutateurs est égal à :

$$N3 = \frac{N1}{P1} \times \frac{P1^2 - 1}{2}\text{, et pour } \frac{N1}{P1} \text{ blocs d'entrée, l'un des ports d'entrée } (W_1,...,W_{P1}) \text{ de ce bloc d'entrée}$$

est relié directement via une liaison de données respective (24) à l'un des ports de sortie $(Z_1,..., Z_{P2})$ d'un bloc de sortie $(S_1,..., S_{N2})$ respectif,

et **en ce que** pour chaque commutateur $(C_1,..., C_{N3})$ la première (30) et la deuxième (32) bornes d'entrée sont chacune reliées directement via une liaison de données respective (24) à des blocs d'entrée $(E_1,..., E_{N1})$ différents et la première (34) et la deuxième (36) bornes de sortie sont chacune reliées directement via une liaison de données respective (24) à des blocs de sortie $(S_1,..., S_{N2})$ différents.

2. Réseau de communication (18, 118) selon la revendication 1, dans lequel, pour chaque commutateur, la première (30) et la deuxième (32) bornes d'entrée sont reliées aux blocs d'entrée via l'un de leurs ports d'entrée $(W_1,...,W_{P1})$ et la première (34) et la deuxième (36) bornes de sortie sont reliées aux blocs de sortie via l'un de leurs ports de sortie $(Z_1,..., Z_{P2})$, et dans lequel chaque port d'entrée $(W_1,...,W_{P1})$ est connecté respectivement à une seule des liaisons de données (24) et chaque port de sortie $(Z_1,..., Z_{P2})$ est connecté respectivement à une seule des liaisons de donnée (24).

3. Réseau de communication selon l'une quelconque des revendications précédentes, dans lequel les liaisons de données (24) sont des liaisons physiques point à point.

4. Réseau de communication selon l'une quelconque des revendications précédentes, dans lequel en numérotant les blocs d'entrée $(E_1,..., E_{N1})$ avec un indice j différent allant de 1 à N1 et les blocs de sorties $(S_1,..., S_{N2})$ avec un indice i différent allant de 1 à N2, avec N2 le nombre de blocs de sortie $(S_1,..., S_{N2})$, le réseau de communication (18, 118) respecte les règles suivantes pour chaque bloc d'entrée $(E_1,..., E_{N1})$ numéroté de 1 à N1 considéré successivement, afin de relier entre eux les blocs d'entrée $(E_1,..., E_{N1})$, les blocs de sortie $(S_1,..., S_{N2})$ et les commutateurs $(C_1,..., C_{N3})$ via les liaisons de données (24) :

- si k, le reste de la division euclidienne de l'indice j du bloc d'entrée $(E_J)$ par P1 est égal à 1 :

+ un premier groupe de P1 commutateurs $(C_1,..., C_{N3})$ non-reliés à des blocs d'entrée $(E_1,..., E_{N1})$ et de sortie $(S_1,..., S_{N2})$ est sélectionné,
+ les P1 ports d'entrée du bloc d'entrée $(E_J)$ sont reliés respectivement à l'une des bornes d'entrée de l'un des commutateurs $(C_1,..., C_{N3})$ respectif du premier groupe,
+ l'une des bornes de sortie de chacun des commutateurs $(C_1,..., C_{N3})$ du premier groupe est reliée respectivement à l'un des ports de sortie $(Z_1,..., Z_{P2})$ du bloc de sortie $(S_1,..., S_{N2})$ ayant un indice i égal à l'indice j du bloc d'entrée $(E_j)$, et
+ l'autre borne de sortie de P1-1 commutateurs $(C_1,..., C_{N3})$ du premier groupe est reliée respectivement à l'un des ports de sortie d'un bloc de sortie respectif $(S_1,..., S_{N2})$ choisi parmi P1-1 blocs de sortie ayant un indice i strictement supérieur à l'indice j du bloc d'entrée $(E_j)$ et inférieur ou égal à j+P1-1,

- si k, le reste de la division euclidienne de l'indice j du bloc d'entrée par P1 est strictement supérieur à 1 :

+ un des commutateurs $(C_1,..., C_{N3})$ ayant une seule de ses bornes d'entrée libre et ses deux bornes de sortie reliées respectivement à un premier bloc de sortie $(S_1,..., S_{N2})$ relié lui-même à seulement k-1 commutateurs $(C_1,..., C_{N3})$ et à un deuxième bloc de sortie relié lui-même à P1 commutateurs est identifié,
+ la borne d'entrée libre du commutateur $(C_1,..., C_{N3})$ identifié est reliée à l'un des ports d'entrée du bloc d'entrée $(E_j)$,
+ si k > 2, une borne d'entrée libre (30, 32) de chacun des commutateurs, autre que le commutateur identifié, qui a l'une de ses bornes de sortie reliée au premier bloc de sortie est reliée à l'un des ports d'entrée du bloc d'entrée $(E_j)$,
+ si k est pair, un commutateur $(C_1,..., C_{N3})$ a une seule borne de sortie libre et est repéré, la borne de sortie libre du commutateur repéré est alors reliée au premier bloc de sortie et une des bornes d'entrée du commutateur repérée est reliée à l'un des ports d'entrée du bloc d'entrée ($E_j$),

+ si k est pair et k>2, un deuxième groupe de P1-1-(k-2)-1 commutateurs ($C_1$,..., $C_{N3}$) non-reliés à des blocs d'entrée ($E_1$,..., $E_{N1}$) et de sortie ($S_1$,..., $S_{N2}$) est sélectionné, tandis que si k est pair et k≤2, un deuxième groupe de P1-2 commutateurs non-reliés à des blocs d'entrée et de sortie est sélectionné, et que si k est impair et k>2, un deuxième groupe de P1-1-(k-2) commutateurs non-reliés à des blocs d'entrée et de sortie est sélectionné et que si k est impair et k≤2, un deuxième groupe de P1-1 commutateurs non-reliés à des blocs d'entrée et de sortie est sélectionné, et

+ l'une des bornes d'entrée (30, 32) de chaque commutateur ($C_1$,..., $C_{N3}$) du deuxième groupe est reliée respectivement à l'un des ports d'entrée ($W_1$,...,$W_{P1}$) du bloc d'entrée ($E_j$) et l'une des bornes de sortie (34, 36) de chaque commutateur du deuxième groupe est reliée respectivement à l'un des ports de sortie ($Z_1$,..., $Z_{P2}$) du premier bloc de sortie, et un port de sortie ($Z_1$,..., $Z_{P2}$) libre de chaque bloc de sortie ayant uniquement k-1 ports de sortie non-libres est relié respectivement à une des bornes de sorties libre des commutateurs ($C_1$,..., $C_{N3}$) du deuxième groupe,

- si k, le reste de la division euclidienne de l'indice j du bloc d'entrée par P1 est égal à 0 :

+ un des commutateurs ($C_1$,..., $C_{N3}$) ayant une seule borne d'entrée libre et ses deux bornes de sortie reliées respectivement à un troisième bloc de sortie ($S_1$,..., $S_{N2}$) déjà relié lui-même à P1-1 commutateurs et à un quatrième bloc de sortie ($S_1$,..., $S_{N2}$) déjà relié lui-même à P1 commutateurs est choisi,

+ la borne d'entrée libre du commutateur choisi est reliée à l'un des ports d'entrée du bloc d'entrée ($E_j$),

+ Si P1> 2, une borne d'entrée libre (30, 32) de chacun des commutateurs ($C_1$,..., $C_{N3}$), autre que le commutateur choisi, qui a une borne de sortie (34, 36) reliée au troisième bloc de sortie est reliée à l'un des ports d'entrée du bloc d'entrée ($E_j$),

+ si P1 est pair, un commutateur ayant une seule borne d'entrée libre et une seule borne de sortie libre a sa borne d'entrée libre qui est reliée à l'un des ports d'entrée ($W_1$,...,$W_{P1}$) du bloc d'entrée ($E_j$) et sa borne de sortie libre qui est reliée à l'un des ports de sortie ($Z_1$,..., $Z_{P2}$) du troisième bloc de sortie,

+ si P1 est impair, l'un des ports d'entrée du bloc d'entrée ($E_j$) est directement relié à l'un des ports de sortie du troisième bloc de sortie.

5. Réseau de communication selon l'une quelconque des revendications précédentes, dans lequel le réseau de communication (18, 118) comprend un dispositif (40) de détection d'indisponibilités des blocs de sortie ($S_1$,..., $S_{N2}$) et/ou des commutateurs ($C_1$,..., $C_{N3}$) et un dispositif (42) de commande propre à transmettre chaque signal de commande à chaque commutateur ($C_1$,..., $C_{N3}$), et dans lequel le dispositif de commande (42) comprend une unité de calcul (44) configurée pour calculer chaque signal de commande en fonction des indisponibilités détectées.

6. Système de mesure (12, 112), notamment pour un porteur tel qu'un aéronef, comprenant une pluralité de blocs d'entrée ($E_1$,..., $E_{N1}$), tels que des capteurs de mesure, une pluralité de blocs de sortie ($S_1$,..., $S_{N2}$), tels que des organes de calcul, et un réseau de communication (18, 118) s'étendant entre les blocs d'entrée ($E_1$,..., $E_{N1}$) et les blocs de sortie ($S_1$,..., $S_{N2}$), **caractérisé en ce que** le réseau de communication (18, 118) est selon l'une quelconque des revendications précédentes.

7. Système de mesure (12, 112) selon la revendication 6, dans lequel chaque bloc d'entrée ($E_1$,..., $E_{N1}$) est propre à transmettre sur chaque port d'entrée ($W_1$,...,$W_{P1}$) un flux de données d'entrée ayant un débit d'entrée prédéterminé ($q_1$,..., $q_{N1}$) et chaque bloc de sortie ($S_1$,..., $S_{N2}$) est propre à recevoir un flux de données de sortie ayant un débit de sortie maximal ($Q_1$,..., $Q_{N2}$), et en ce que pour chaque bloc de sortie, le débit de sortie maximal ($Q_1$,..., $Q_{N2}$) associé vérifie l'inéquation, $Q_i \geq A \times q_M + R$, avec i un indice représentatif du bloc de sortie considéré, avec $q_M$ un maximum des débits d'entrée prédéterminés, A un entier strictement supérieur à 1 et R un réel strictement inférieur à $q_M$.

8. Système de mesure (12, 112) selon la revendication 7, dans lequel le nombre prédéterminé P1 de ports d'entrée ($W_1$,...,$W_{P1}$) vérifie l'inéquation suivante : P1≤ A.

9. Porteur, notamment aéronef (10), **caractérisé en ce qu'**il comprend un système de mesure (12, 112) selon l'une quelconque des revendications 6 à 8.

10. Procédé de construction d'un réseau de communication s'étendant entre une pluralité de blocs d'entrée ($E_1$,..., $E_{N1}$) et une pluralité de blocs de sortie ($S_1$,..., $S_{N2}$), chaque bloc d'entrée ($E_1$,..., $E_{N1}$) comprenant un nombre prédéterminé P1 de ports d'entrée ($W_1$,...,$W_{P1}$), le nombre prédéterminé P1 de ports d'entrée étant un multiple du nombre N1 de blocs d'entrée ($E_1,..., E_{N1}$) et étant strictement supérieur à 1,

chaque bloc de sortie ($S_1,..., S_{N2}$) comprenant un nombre P2 de ports de sorties ($Z_1,..., Z_{P2}$) supérieur ou égal au nombre prédéterminé P1 de ports d'entrée,

le procédé comprenant l'étape suivante :

- la fourniture (104) d'une pluralité de commutateurs ($C_1,..., C_{N3}$), chaque commutateur ($C_1,..., C_{N3}$) comprenant une première (30) et une deuxième (32) bornes d'entrée et une première (34) et une deuxième (36) bornes de sortie et étant propre à relier les première (30) et deuxième (32) bornes d'entrée respectivement aux première (34) et deuxième (36) bornes de sortie, ou inversement, en fonction d'un signal de commande respectif reçu par le commutateur,

**caractérisé en ce que**:

- si le nombre de ports d'entrée est pair, le nombre N3 de commutateurs fourni lors de l'étape de fourniture est

égal à : $N3 = N1 \times \dfrac{P1}{2}$, et

- si le nombre de ports d'entrée est impair, le nombre N3 de commutateurs fourni lors de l'étape de fourniture

est égal à : $N3 = \dfrac{N1}{P1} \times \dfrac{P1^2 - 1}{2}$,

**en ce que** lorsque le nombre de ports d'entrée est impair, le procédé comprend une étape de liaison (105) au cours

de laquelle pour $\dfrac{N1}{P1}$ blocs d'entrée, l'un des ports d'entrée ($W_1,...,W_{P1}$) de ce bloc d'entrée est relié directement via une liaison de données respective (24) à l'un des ports de sortie ($Z_1,..., Z_{P2}$) d'un bloc de sortie respectif,

et **en ce que** le procédé comprend pour chaque commutateur ($C_1,..., C_{N3}$) les étapes suivantes:

- la connexion (106) directe de la première (30) et de la deuxième (32) bornes d'entrée via une liaison de données respective (24) à des blocs d'entrée différents, et
- la connexion (108) directe de la première (34) et de la deuxième (36) bornes de sortie via une liaison de données respective (24) à des blocs de sortie différents.

11. Procédé selon la revendication 10, dans lequel en numérotant les blocs d'entrée ($E_1,..., E_{N1}$) avec un indice j différent allant de 1 à N1 et les blocs de sorties ($S_1,..., S_{N2}$) avec un indice i différent allant de 1 à N2, avec N2 le nombre de blocs de sortie, le procédé comprend lors des étapes de liaison (105) et de connexion (106, 108) les sous-étapes suivantes réalisées pour chaque bloc d'entrée ($E_1,..., E_{N1}$) numéroté de 1 à N1 considéré successivement, afin de relier entre eux les blocs d'entrée ($E_1,..., E_{N1}$), les blocs de sortie ($S_1,..., S_{N2}$) et les commutateurs ($C_1,..., C_{N3}$) via les liaisons de données (24) :

- si k, le reste de la division euclidienne de l'indice j du bloc d'entrée par P1 est égal à 1 :

  + un premier groupe de P1 commutateurs ($C_1,..., C_{N3}$) non-reliés à des blocs d'entrée ($E_1,..., E_{N1}$) et de sortie ($S_1,..., S_{N2}$) est sélectionné,
  + les P1 ports d'entrée du bloc d'entrée sont reliés respectivement à l'une des bornes d'entrée de l'un des commutateurs ($C_1,..., C_{N3}$) respectif du premier groupe,
  + l'une des bornes de sortie de chacun des commutateurs ($C_1,..., C_{N3}$) du premier groupe est reliée respectivement à l'un des ports de sortie ($Z_1,..., Z_{P2}$) du bloc de sortie ($S_1,..., S_{N2}$) ayant un indice i égal à l'indice j du bloc d'entrée ($E_j$), et
  + l'autre borne de sortie de P1-1 commutateurs ($C_1,..., C_{N3}$) du premier groupe est reliée respectivement à l'un des ports de sortie d'un bloc de sortie respectif ($S_1,..., S_{N2}$) choisi parmi P1-1 blocs de sortie ayant un indice i strictement supérieur à l'indice j du bloc d'entrée ($E_j$) et inférieur ou égal à j+P1-1,

- si k, le reste de la division euclidienne de l'indice j du bloc d'entrée par P1 est strictement supérieur à 1 :

  + un des commutateurs ($C_1,..., C_{N3}$) ayant une seule de ses bornes d'entrée libre et ses deux bornes de sortie reliées respectivement à un premier bloc de sortie ($S_1$,..., $S_{N2}$) relié lui-même à seulement k-1 commutateurs ($C_1$,..., $C_{N3}$) et à un deuxième bloc de sortie relié lui-même à P1 commutateurs est identifié,

+ la borne d'entrée libre du commutateur ($C_1$,..., $C_{N3}$) identifié est reliée à l'un des ports d'entrée du bloc d'entrée ($E_j$),

+ si k > 2, une borne d'entrée libre (30, 32) de chacun des commutateurs, autre que le commutateur identifié, qui a l'une de ses bornes de sortie reliée au premier bloc de sortie est reliée à l'un des ports d'entrée du bloc d'entrée ($E_j$),

+ si k est pair, un commutateur ($C_1$,..., $C_{N3}$) a une seule borne de sortie libre et est repéré, la borne de sortie libre du commutateur repéré est alors reliée au premier bloc de sortie et une des bornes d'entrée du commutateur repérée est reliée à l'un des ports d'entrée du bloc d'entrée ($E_j$),

+ si k est pair et k>2, un deuxième groupe de P1-1-(k-2)-1 commutateurs ($C_1$,..., $C_{N3}$) non-reliés à des blocs d'entrée ($E_1$,..., $E_{N1}$) et de sortie ($S_1$,..., $S_{N2}$) est sélectionné, tandis que si k est pair et k≤2, un deuxième groupe de P1-2 commutateurs non-reliés à des blocs d'entrée et de sortie est sélectionné, et que si k est impair et k>2, un deuxième groupe de P1-1-(k-2) commutateurs non-reliés à des blocs d'entrée et de sortie est sélectionné et que si k est impair et k≤2, un deuxième groupe de P1-1 commutateurs non-reliés à des blocs d'entrée et de sortie est sélectionné, et

+ l'une des bornes d'entrée (30, 32) de chaque commutateur ($C_1$,..., $C_{N3}$) du deuxième groupe est reliée respectivement à l'un des ports d'entrée ($W_1$,...,$W_{P1}$) du bloc d'entrée ($E_j$) et l'une des bornes de sortie (34, 36) de chaque commutateur du deuxième groupe est reliée respectivement à l'un des ports de sortie ($Z_1$,..., $Z_{P2}$) du premier bloc de sortie, et un port de sortie ($Z_1$,..., $Z_{P2}$) libre de chaque bloc de sortie ayant uniquement k-1 ports de sortie non-libres est relié respectivement à une des bornes de sorties libre des commutateurs ($C_1$,..., $C_{N3}$) du deuxième groupe,

- si k, le reste de la division euclidienne de l'indice j du bloc d'entrée par P1 est égal à 0 :

+ un des commutateurs ($C_1$,..., $C_{N3}$) ayant une seule borne d'entrée libre et ses deux bornes de sortie reliées respectivement à un troisième bloc de sortie ($S_1$,..., $S_{N2}$) déjà relié lui-même à P1-1 commutateurs et à un quatrième bloc de sortie ($S_1$,..., $S_{N2}$) déjà relié lui-même à P1 commutateurs est choisi,

+ la borne d'entrée libre du commutateur choisi est reliée à l'un des ports d'entrée du bloc d'entrée ($E_j$),

+ Si P1> 2, une borne d'entrée libre (30, 32) de chacun des commutateurs ($C_1$,..., $C_{N3}$), autre que le commutateur choisi, qui a une borne de sortie (34, 36) reliée au troisième bloc de sortie est reliée à l'un des ports d'entrée du bloc d'entrée ($E_j$),

+ si P1 est pair, un commutateur ayant une seule borne d'entrée libre et une seule borne de sortie libre a sa borne d'entrée libre qui est reliée à l'un des ports d'entrée ($W_1$,...,$W_{P1}$) du bloc d'entrée ($E_j$) et sa borne de sortie libre qui est reliée à l'un des ports de sortie ($Z_1$,..., $Z_{P2}$) du troisième bloc de sortie,

+ si P1 est impair, l'un des ports d'entrée du bloc d'entrée ($E_j$) est directement relié à l'un des ports de sortie du troisième bloc de sortie.

## Patentansprüche

1. Kommunikationsnetzwerk (18, 118), welches sich zwischen einer Mehrzahl von Eingangsblöcken ($E_1$, ..., $E_{N1}$) und einer Mehrzahl von Ausgangsblöcken ($S_1$, ..., $S_{N2}$) erstreckt,

wobei jeder Eingangsblock ($E_1$, ..., $E_{N1}$) eine vorbestimmte Zahl P1 an Eingangsports ($W_1$, ..., $W_{P1}$) aufweist, wobei die vorbestimmte Zahl P1 der Eingangsports ein Mehrfaches der Zahl N1 der Eingangsblöcke ($E_1$, ..., $E_{N1}$) ist und strikt größer 1 ist,

wobei jeder Ausgangsblock ($S_1$, ..., $S_{N2}$) eine Zahl P2 an Ausgangsports ($Z_1$, ..., $Z_{P2}$) aufweist, welche größer oder gleich der vorbestimmten Zahl P1 der Eingangsports ist,

wobei das Netzwerk eine Mehrzahl von Umschalteinrichtungen ($C_1$, ..., $C_{N3}$) aufweist, wobei jede Umschalteinrichtung ($C_1$, ..., $C_{N3}$) einen ersten (30) und einen zweiten (32) Eingangsanschluss sowie einen ersten (34) und einen zweiten (36) Ausgangsanschluss aufweist und dazu geeignet ist, den ersten (30) und zweiten (32) Eingangsanschluss jeweilig mit dem ersten (34) und zweiten (36) Ausgangsanschluss, oder umgekehrt, in Abhängigkeit von einem jeweiligen Steuersignal, welches durch die Umschalteinrichtung empfangen wird, zu verbinden, **gekennzeichnet dadurch, dass**:

- falls die vorbestimmte Zahl P1 der Eingangsports geradzahlig ist, dann ist die Zahl N3 der Umschalteinrichtungen gleich: $N3 = N1 \times \frac{P1}{2}$, und

- falls die vorbestimmte Zahl P1 der Eingangsports ungeradzahlig ist, dann ist die Zahl N3 der Umschalteinrichtungen gleich: $N3 = \frac{N1}{P1} \times \frac{P1^2 - 1}{2}$, und ist, für $\frac{N1}{P1}$ Eingangsblöcke, einer der Eingangsports $(W_1, ..., W_{P1})$ dieses Eingangsblocks $(E_1, ..., E_{N1})$ direkt über eine jeweilige Datenverbindung (24) mit einem der Ausgangsports $(Z_1, ..., Z_{P2})$ eines jeweiligen Ausgangsblocks $(S_1, ..., S_{N2})$ verbunden,

und dadurch, dass, für jede Umschalteinrichtung $(C_1, ..., C_{N3})$, der erste (30) und der zweite (32) Eingangsanschluss jeweilig direkt über eine jeweilige Datenverbindung (24) mit unterschiedlichen Eingangsblöcken $(E_1, ..., E_{N1})$ verbunden sind und der erste (34) und der zweite (36) Ausgangsanschluss jeweilig direkt über eine jeweilige Datenverbindung (24) mit unterschiedlichen Ausgangsblöcken $(S_1, ..., S_{N2})$ verbunden sind.

2. Kommunikationsnetzwerk (18, 118) gemäß dem Anspruch 1, wobei, für jede Umschalteinrichtung, der erste (30) und der zweite (32) Eingangsanschluss mit Eingangsblöcken über einen von deren Eingangsports $(W_1, ..., W_{P1})$ verbunden sind und der erste (34) und der zweite (36) Ausgangsanschluss mit Ausgangsblöcken über einen von deren Ausgangsports $(Z_1, ..., Z_{P2})$ verbunden sind, und wobei jeder Eingangsport $(W_1, ..., W_{P1})$ jeweilig mit nur einer der Datenverbindungen (24) verbunden ist und jeder Ausgangsport $(Z_1, ..., Z_{P2})$ jeweilig mit nur einer der Datenverbindungen (24) verbunden ist.

3. Kommunikationsnetzwerk gemäß irgendeinem der vorhergehenden Ansprüche, wobei die Datenverbindungen (24) physische Punkt-zu-Punkt-Verbindungen sind.

4. Kommunikationsnetzwerk gemäß irgendeinem der vorhergehenden Ansprüche, wobei, bei Nummerierung der Eingangsblöcke $(E_1, ..., E_{N1})$ mit einem unterschiedlichen Index j im Bereich von 1 bis N1 und der Ausgangsblöcke $(S_1, ..., S_{N2})$ mit einem unterschiedlichen Index i im Bereich von 1 bis N2, mit N2 als Zahl der Ausgangsblöcke $(S_1, ..., S_{N2})$, das Kommunikationsnetzwerk (18, 118) die folgenden Regeln für jeden Eingangsblock $(E_1, ..., E_{N1})$, welche von 1 bis N1 nacheinander betrachtet durchnummeriert sind, einhält, um die Eingangsblöcke $(E_1, ..., E_{N1})$, die Ausgangsblöcke $(S_1, ..., S_{N2})$ und die Umschalteinrichtungen $(C_1, ..., C_{N3})$ über die Datenverbindungen (24) miteinander zu verbinden:

- falls k, der Rest der euklidischen Division des Index j des Eingangsblocks $(E_j)$ durch P1 gleich 1 ist:

  + eine erste Gruppe von P1 Umschalteinrichtungen $(C_1, ..., C_{N3})$, welche nicht mit Eingangsblöcken $(E_1, ..., E_{N1})$ und Ausgangsblöcken $(S_1, ..., S_{N2})$ verbunden sind, wird ausgewählt,
  + die P1 Eingangsports des Eingangsblocks $(E_j)$ sind jeweilig mit einem der Eingangsanschlüsse von einer jeweiligen der Umschalteinrichtungen $(C_1, ..., C_{N3})$ der ersten Gruppe verbunden,
  + der eine der Ausgangsanschlüsse einer jeden der Umschalteinrichtungen $(C_1, ..., C_{N3})$ der ersten Gruppe ist jeweilig mit einem der Ausgangsports $(Z_1, ..., Z_{P2})$ des Ausgangsblocks $(S_1, ..., S_{N2})$, welcher einen Index i gleich dem Index j des Eingangsblocks $(E_j)$ hat, verbunden, und
  + der andere der Ausgangsanschlüsse von P1-1 Umschalteinrichtungen $(C_1, ..., C_{N3})$ der ersten Gruppe ist jeweilig mit einem der Ausgangsports eines jeweiligen Ausgangsblocks $(S_1, ..., S_{N2})$, der ausgewählt ist aus P1-1 Ausgangsblöcken, welche einen Index i strikt größer dem Index j des Eingangsblocks $(E_j)$ und kleiner oder gleich j+P1-1 haben, verbunden,

- falls k, der Rest der euklidischen Division des Index j des Eingangsblocks $(E_j)$ durch P1 strikt größer 1 ist:

  + eine der Umschalteinrichtungen $(C_1, ..., C_{N3})$ wird identifiziert, welche nur einen von ihren Eingangsanschlüssen frei hat und deren zwei Ausgangsanschlüsse jeweilig mit einem ersten Ausgangblock $(S_1, ..., S_{N2})$, welcher wiederum mit nur k-1 Umschalteinrichtungen $(C_1, ..., C_{N3})$ verbunden ist, und einem zweiten Ausgangsblock, welcher wiederum mit P1 Umschalteinrichtungen verbunden ist, verbunden sind,
  + der freie Eingangsanschluss der identifizierten Umschalteinrichtung $(C_1, ..., C_{N3})$ ist mit einem der Eingangsports des Eingangsblocks $(E_j)$ verbunden,
  + falls k > 2, ist ein freier Eingangsanschluss (30, 32) jeder der Umschalteinrichtungen außer der identifizierten Umschalteinrichtung, welche einen ihrer Ausgangsanschlüsse, der mit dem ersten Ausgangsblock verbunden ist, aufweist, mit einem der Eingangsanschlüsse des Eingangsblocks $(E_j)$ verbunden,
  + falls k geradzahlig ist, eine Umschalteinrichtung $(C_1, ..., C_{N3})$ einen einzigen freien Ausgangsanschluss hat und markiert ist, ist dann der freie Ausgangsanschluss der markierten Umschalteinrichtung mit dem ersten Ausgangsblock verbunden und ist einer der Eingangsanschlüsse der markierten Umschalteinrichtung mit einem der Eingangsports des Eingangsblocks (Ej) verbunden,

+ falls k geradzahlig und k>2 ist, wird eine zweite Gruppe von P1-1-(k-2)-1 Umschalteinrichtungen ($C_1$, ..., $C_{N3}$), welche nicht mit Eingangsblöcken ($E_1$, ..., $E_{N1}$) und Ausgangsblöcken ($S_1$, ..., $S_{N2}$) verbunden, ausgewählt, wobei, falls k geradzahlig und k≤2 ist, wird eine zweite Gruppe von P1-2 Umschalteinrichtungen, welche nicht mit Eingangs- und Ausgangsblöcken verbunden sind, ausgewählt, und wobei, falls k ungeradzahlig und k>2 ist, wird eine zweite Gruppe von P1-1-(k-2) Umschalteinrichtungen, welche nicht mit Eingangs- und Ausgangsblöcken verbunden sind, ausgewählt, und wobei, falls k ungeradzahlig und k≤2 ist, wird eine zweite Gruppe von P1-1 Umschalteinrichtungen, welche nicht mit Eingangs- und Ausgangsblöcken verbunden sind, ausgewählt, und

+ einer der Eingangsanschlüsse (30, 32) jeder Umschalteinrichtung ($C_1$, ..., $C_{N3}$) der zweiten Gruppe ist jeweilig mit einem der Eingangsports ($W_1$, ..., $W_{P1}$) des Eingangsblocks ($E_j$) verbunden und einer der Ausgangsanschlüsse (34, 36) jeder Umschalteinrichtung der zweiten Gruppe ist jeweilig mit einem der Ausgangsports ($Z_1$, ..., $Z_{P2}$) des ersten Ausgangsblocks verbunden, und ein freier Ausgangsport ($Z_1$, ..., $Z_{P2}$) jedes Ausgangsblocks, welcher ausschließlich k-1 Ausgangsports, die nicht frei sind, hat, ist jeweilig mit einem der freien Ausgangsanschlüsse der Umschalteinrichtungen ($C_1$, ..., $C_{N3}$) der zweiten Gruppe verbunden,

- falls k, der Rest der euklidischen Division des Index j des Eingangsblocks (Ej) durch P1 gleich 0 ist:

+ eine der Umschalteinrichtungen ($C_1$, ..., $C_{N3}$) ausgewählt wird, welche nur einen freien Eingangsanschluss hat und deren zwei Ausgangsanschlüsse jeweilig mit einem dritten Ausgangblock ($S_1$, ..., $S_{N2}$), welcher bereits selbst mit P1-1 Umschalteinrichtungen verbunden ist, und mit einem vierten Ausgangsblock ($S_1$, ..., $S_{N2}$), welcher bereits selbst mit P1 Umschalteinrichtungen verbunden ist, verbunden sind,

+ der freie Eingangsanschluss der ausgewählten Umschalteinrichtung mit einem der Eingangsports des Eingangsblocks (Ej) verbunden ist,

+ falls P1 > 2, ein freier Eingangsanschluss (30, 32) jeder der Umschalteinrichtungen ($C_1$, ..., $C_{N3}$) außer der ausgewählten Umschalteinrichtung, welche einen Ausgangsanschluss (34, 36), der mit dem dritten Ausgangsblock verbunden ist, aufweist, mit einem der Eingangsanschlüsse des Eingangsblocks (Ej) verbunden ist,

+ falls P1 ganzzahlig ist, von einer Umschalteinrichtung, welche einen einzigen freien Eingangsanschluss und einen einzigen freien Ausgangsanschluss hat, ihr freier Eingangsanschluss mit einem der Eingangsports ($W_1$, ..., $W_{P1}$) des Eingangsblocks (Ej) verbunden ist und ihr freier Ausgangsanschluss mit einem der Ausgangsports ($Z_1$, ..., $Z_{P2}$) des dritten Ausgangsblocks verbunden ist,

+ falls P1 ungeradzahlig ist, einer der Eingangsports des Eingangsblocks ($E_j$) direkt mit einem der Ausgangsports des dritten Ausgangsblocks verbunden wird.

5. Kommunikationsnetzwerk gemäß irgendeinem der vorhergehenden Ansprüche, wobei das Kommunikationsnetzwerk (18, 118) eine Vorrichtung (40) zum Detektieren von Nichtverfügbarkeiten der Ausgangsblöcke ($S_1$, ..., $S_{N2}$) und/oder der Umschalteinrichtungen ($C_1$, ..., $C_{N3}$) und eine Steuervorrichtung (42), welche dazu geeignet ist, jedes Steuersignal an jede Umschalteinrichtung ($C_1$, ..., $C_{N3}$) zu senden, aufweist, und wobei die Steuervorrichtung (42) eine Berechnungseinheit (44) aufweist, welche dazu eingerichtet ist, jedes Steuersignal in Abhängigkeit von den detektierten Nichtverfügbarkeiten zu berechnen.

6. Messsystem (12, 112), insbesondere für eine Transporteinrichtung, wie zum Beispiel ein Flugzeug, aufweisend eine Mehrzahl von Eingangsblöcken ($E_1$, ..., $E_{N1}$), wie zum Beispiel Messsensoren, und eine Mehrzahl von Ausgangsblöcken ($S_1$, ..., $S_{N2}$), wie zum Beispiel Berechnungseinrichtungen, und ein Kommunikationsnetzwerk (18, 118), welches sich zwischen den Eingangsblöcken ($E_1$, ..., $E_{N1}$) und den Ausgangsblöcken ($S_1$, ..., $S_{N2}$) erstreckt, **gekennzeichnet dadurch, dass** das Kommunikationsnetzwerk (18, 118) gemäß irgendeinem der vorhergehenden Ansprüche ist.

7. Messsystem (12, 112) gemäß dem Anspruch 6, wobei jeder Eingangsblock ($E_1$, ..., $E_{N1}$) dazu geeignet ist, über jeden Eingangsport ($W_1$, ..., $W_{P1}$) einen Eingangsdatenfluss mit einem vorbestimmten Eingangsdurchsatz (q1, ..., $q_{N1}$) zu übertragen, und jeder Ausgangsblock ($S_1$, ..., $S_{N2}$) dazu geeignet ist, einen Ausgangsdatenfluss mit einem maximalen Ausgangsdurchsatz ($Q_1$, ..., $Q_{N2}$) zu empfangen, und wobei, für jeden Ausgangblock, der zugehörige maximale Ausgangsdurchsatz ($Q_1$, ..., $Q_{N2}$) die Ungleichung $Q_i \geq A \times q_M + R$ erfüllt, wobei i ein für den betrachteten Ausgangsblock repräsentativer Index ist, wobei $q_M$ ein Maximum von vorbestimmten Eingangsdurchsätzen, A eine ganze Zahl strikt größer 1 und R ein reelle Zahl strikt kleiner $q_M$ ist.

8. Messsystem gemäß dem Anspruch 7, wobei die vorbestimmte Zahl P1 von Eingangsports ($W_1$, ...., $W_{P1}$) die folgende Ungleichung erfüllt: P1 ≤ A.

9. Transporteinrichtung, insbesondere Flugzeug (10), **gekennzeichnet dadurch, dass** es ein Messsystem (12, 112) gemäß irgendeinem der Ansprüche 6 bis 8 aufweist.

10. Verfahren zum Aufbau eines Kommunikationsnetzwerks, welches sich zwischen einer Mehrzahl von Eingangsblöcken ($E_1$, ..., $E_{N1}$) und einer Mehrzahl von Ausgangsblöcken ($S_1$, ..., $S_{N2}$) erstreckt,
wobei jeder Eingangsblock ($E_1$, ..., $E_{N1}$) eine vorbestimmte Zahl P1 an Eingangsports ($W_1$, ..., $W_{P1}$) aufweist, wobei die vorbestimmte Zahl P1 der Eingangsports ein Mehrfaches der Zahl N1 der Eingangsblöcke ($E_1$, ..., $E_{N1}$) ist und strikt größer 1 ist,
wobei jeder Ausgangsblock ($S_1$, ..., $S_{N2}$) eine Zahl P2 an Ausgangsports ($Z_1$, ..., $Z_{P2}$) aufweist, welche größer oder gleich der vorbestimmten Zahl P1 der Eingangsports ist,
wobei das Verfahren die folgenden Schritte aufweist:

   - das Bereitstellen (104) einer Mehrzahl von Umschalteinrichtungen ($C_1$, ..., $C_{N3}$), wobei jede Umschalteinrichtung ($C_1$, ..., $C_{N3}$) einen ersten (30) und einen zweiten (32) Eingangsanschluss sowie einen ersten (34) und einen zweiten (36) Ausgangsanschluss aufweist und dazu geeignet ist, den ersten (30) und zweiten (32) Eingangsanschluss jeweilig mit dem ersten (34) und zweiten (36) Ausgangsanschluss, oder umgekehrt, in Abhängigkeit von einem jeweiligen Steuersignal, welches durch die Umschalteinrichtung empfangen wird, zu verbinden,

   **gekennzeichnet dadurch, dass**:

   - falls die Zahl der Eingangsports geradzahlig ist, dann ist die Zahl N3 der beim Schritt des Bereitstellens bereitgestellten Umschalteinrichtungen gleich: $N3 = N1 \times \frac{P1}{2}$, und

   falls die Zahl der Eingangsports ungeradzahlig ist, dann ist die Zahl N3 der beim Schritt des Bereitstellens bereitgestellten Umschalteinrichtungen gleich: $N3 = \frac{N1}{P1} \times \frac{P1^2 - 1}{2}$, und

   dadurch, dass, falls die Zahl der Eingangsports ungeradzahlig ist, das Verfahren einen Anschlussschritt (105) aufweist, während welchem, für $\frac{N1}{P1}$ Eingangsblöcke, einer der Eingangsports ($W_1$, ..., $W_{P1}$) dieses Eingangsblocks ($E_1$, ..., $E_{N1}$) direkt über eine jeweilige Datenverbindung (24) mit einem der Ausgangsports ($Z_1$, ..., $Z_{P2}$) eines jeweiligen Ausgangsblocks ($S_1$, ..., $S_{N2}$) verbunden wird,
   und dadurch, dass das Verfahren die folgenden Schritte für jede Umschalteinrichtung ($C_1$, ..., $C_{N3}$) aufweist:

   - das direkte Verbinden (106) des ersten (30) und des zweiten (32) Eingangsanschlusses über eine jeweilige Datenverbindung (24) mit unterschiedlichen Eingangsblöcken, und
   - das direkte Verbinden (108) des ersten (34) und des zweiten (35) Ausgangsanschlusses über eine jeweilige Datenverbindung (24) mit unterschiedlichen Ausgangsblöcken.

11. Verfahren gemäß dem Anspruch 10, wobei, bei Nummerierung der Eingangsblöcke ($E_1$, ..., $E_{N1}$) mit einem unterschiedlichen Index j im Bereich von 1 bis N1 und der Ausgangsblöcke ($S_1$, ..., $S_{N2}$) mit einem unterschiedlichen Index i im Bereich von 1 bis N2, mit N2 als Zahl der Ausgangsblöcke, das Verfahren während der Schritte des Anschließens (105) und des Verbindens (106, 108) die folgenden Unterschritte aufweist, welche für jeden für jeden Eingangsblock ($E_1$, ..., $E_{N1}$), welche von 1 bis N1 nacheinander betrachtet durchnummeriert sind, umgesetzt werden, um die Eingangsblöcke ($E_1$, ..., $E_{N1}$), die Ausgangsblöcke ($S_1$, ..., $S_{N2}$) und die Umschalteinrichtungen ($C_1$, ..., $C_{N3}$) über die Datenverbindungen (24) miteinander zu verbinden:

   - falls k, der Rest der euklidischen Division des Index j des Eingangsblocks ($E_j$) durch P1 gleich 1 ist:

      + eine erste Gruppe von P1 Umschalteinrichtungen ($C_1$, ..., $C_{N3}$), welche nicht mit Eingangsblöcken ($E_1$, ..., $E_{N1}$) und Ausgangsblöcken ($S_1$, ..., $S_{N2}$) verbunden sind, wird ausgewählt,
      + die P1 Eingangsports des Eingangsblocks werden jeweilig mit einem der Eingangsanschlüsse von einer

jeweiligen der Umschalteinrichtungen ($C_1$, ..., $C_{N3}$) der ersten Gruppe verbunden,

+ der eine der Ausgangsanschlüsse einer jeden der Umschalteinrichtungen ($C_1$, ..., $C_{N3}$) der ersten Gruppe wird jeweilig mit einem der Ausgangports ($Z_1$, ..., $Z_{P2}$) des Ausgangsblocks ($S_1$, ..., $S_{N2}$), welcher einen Index i gleich dem Index j des Eingangsblocks (Ej) hat, verbunden, und

+ der andere der Ausgangsanschlüsse von P1-1 Umschalteinrichtungen ($C_1$, ..., $C_{N3}$) der ersten Gruppe wird jeweilig mit einem der Ausgangports eines jeweiligen Ausgangsblocks ($S_1$, ..., $S_{N2}$), der ausgewählt ist aus P1-1 Ausgangsblöcken, welche einen Index i strikt größer dem Index j des Eingangsblocks ($E_j$) und kleiner oder gleich j+P1-1 haben, verbunden,

- falls k, der Rest der euklidischen Division des Index j des Eingangsblocks (Ej) durch P1 strikt größer 1 ist:

+ eine der Umschalteinrichtungen ($C_1$, ..., $C_{N3}$) wird identifiziert, welche nur einen von ihren Eingangsanschlüssen frei hat und deren zwei Ausgangsanschlüsse jeweilig mit einem ersten Ausgangblock ($S_1$, ..., $S_{N2}$), welcher wiederum mit nur k-1 Umschalteinrichtungen ($C_1$, ..., $C_{N3}$) verbunden ist, und einem zweiten Ausgangsblock, welcher wiederum mit P1 Umschalteinrichtungen verbunden ist, verbunden sind,

+ der freie Eingangsanschluss der identifizierten Umschalteinrichtung ($C_1$, ..., $C_{N3}$) wird mit einem der Eingangsports des Eingangsblocks (Ej) verbunden,

+ falls k > 2, wird ein freier Eingangsanschluss (30, 32) jeder der Umschalteinrichtungen außer der identifizierten Umschalteinrichtung, welche einen ihrer Ausgangsanschlüsse, der mit dem ersten Ausgangsblock verbunden ist, aufweist, mit einem der Eingangsanschlüsse des Eingangsblocks (Ej) verbunden,

+ falls k geradzahlig ist, eine Umschalteinrichtung ($C_1$, ..., $C_{N3}$) einen einzigen freien Ausgangsanschluss hat und markiert ist, wird der freie Ausgangsanschluss der markierten Umschalteinrichtung dann mit dem ersten Ausgangsblock verbunden und wird einer der Eingangsanschlüsse der markierten Umschalteinrichtung mit einem der Eingangsports des Eingangsblocks (Ej) verbunden,

+ falls k geradzahlig und k>2 ist, wird eine zweite Gruppe von P1-1-(k-2)-1 Umschalteinrichtungen ($C_1$, ..., $C_{N3}$), welche nicht mit Eingangsblöcken ($E_1$, ..., $E_{N1}$) und Ausgangsblöcken ($S_1$, ..., $S_{N2}$) verbunden sind, ausgewählt, wobei, falls k geradzahlig und k≤2 ist, wird eine zweite Gruppe von P1-2 Umschalteinrichtungen, welche nicht mit Eingangs- und Ausgangsblöcken verbunden sind, ausgewählt, und wobei, falls k ungeradzahlig und k>2 ist, wird eine zweite Gruppe von P1-1-(k-2) Umschalteinrichtungen, welche nicht mit Eingangs- und Ausgangsblöcken verbunden sind, ausgewählt, und wobei, falls k ungeradzahlig und k≤2 ist, wird eine zweite Gruppe von P1-1 Umschalteinrichtungen, welche nicht mit Eingangs- und Ausgangsblöcken verbunden sind, ausgewählt, und

+ einer der Eingangsanschlüsse (30, 32) jeder Umschalteinrichtung ($C_1$, ..., $C_{N3}$) der zweiten Gruppe wird jeweilig mit einem der Eingangsports ($W_1$, ..., $W_{P1}$) des Eingangsblocks ($E_j$) verbunden und einer der Ausgangsanschlüsse (34, 36) jeder Umschalteinrichtung der zweiten Gruppe wird jeweilig mit einem der Ausgangsports ($Z_1$, ..., $Z_{P2}$) des ersten Ausgangsblocks verbunden, und ein freier Ausgangsport ($Z_1$, ..., $Z_{P2}$) jedes Ausgangsblocks, welcher ausschließlich k-1 Ausgangsports, die nicht frei sind, hat, wird jeweilig mit einem der freien Ausgangsanschlüsse der Umschalteinrichtungen ($C_1$, ..., $C_{N3}$) der zweiten Gruppe verbunden,

- falls k, der Rest der euklidischen Division des Index j des Eingangsblocks (Ej) durch P1 gleich 0 ist:

+ eine der Umschalteinrichtungen ($C_1$, ..., $C_{N3}$) ausgewählt wird, welche nur einen freien Eingangsanschluss hat und deren zwei Ausgangsanschlüsse jeweilig mit einem dritten Ausgangblock ($S_1$, ..., $S_{N2}$), welcher bereits selbst mit P1-1 Umschalteinrichtungen verbunden ist, und mit einem vierten Ausgangsblock ($S_1$, ..., $S_{N2}$), welcher bereits selbst mit P1 Umschalteinrichtungen verbunden ist, verbunden sind,

+ der freie Eingangsanschluss der ausgewählten Umschalteinrichtung mit einem der Eingangsports des Eingangsblocks (Ej) verbunden wird,

+ falls P1 > 2, ein freier Eingangsanschluss (30, 32) jeder der Umschalteinrichtungen ($C_1$, ..., $C_{N3}$) außer der ausgewählten Umschalteinrichtung, welche einen Ausgangsanschluss (34, 36), der mit dem dritten Ausgangsblock verbunden ist, aufweist, mit einem der Eingangsanschlüsse des Eingangsblocks (Ej) verbunden wird,

+ falls P1 ganzzahlig ist, von einer Umschalteinrichtung, welche einen einzigen freien Eingangsanschluss und einen einzigen freien Ausgangsanschluss hat, ihr freier Eingangsanschluss mit einem der Eingangsports ($W_1$, ...., $W_{P1}$) des Eingangsblocks (Ej) verbunden wird und ihre freier Ausgangsanschluss mit einem der Ausgangsports ($Z_1$, ..., $Z_{P2}$) des dritten Ausgangsblocks verbunden wird,

+ falls P1 ungeradzahlig ist, einer der Eingangsports des Eingangsblocks ($E_j$) direkt mit einem der Ausgangsports des dritten Ausgangsblocks verbunden wird.

**Claims**

1. A communication network (18, 118) extending between a plurality of input blocks ($E_1$,..., $E_{N1}$) and a plurality of output blocks ($S_1$,..., $S_{N2}$),

   each input block ($E_1$,..., $E_{N1}$) comprising a predetermined number P1 of input ports ($W_1$,...,$W_{P1}$), the predetermined number P1 of input ports being a multiple of the number N1 of input blocks ($E_1$,..., $E_{N1}$) and being strictly greater than 1,
   each output block ($S_1$,..., $S_{N2}$) comprising a number P2 of output ports ($Z_1$,..., $Z_{P2}$) greater than or equal to the predetermined number P1 of input ports,
   the network comprising a plurality of switches ($C_1$,..., $C_{N3}$), each switch ($C_1$,..., $C_{N3}$) comprising a first (30) and second (32) input terminals and a first (34) and second (36) output terminals and being able to connect the first (30) and second (32) input terminals, respectively, to the first (34) and second (36) output terminals or vice versa, based on a command signal received by the switch,
   **characterized in that**:

   - when the predetermined number P1 of input ports is even, the number N3 of switches is equal to:

   $$N3 = N1 \times \frac{P1}{2}, \text{ and}$$

   - when the predetermined number P1 of input ports is odd, the number N3 of switches is equal to:

   $$N3 = \frac{N1}{P1} \times \frac{P1^2 - 1}{2}, \text{ and for } \frac{N1}{P1} \text{ input blocks, one of the input ports } (W_1,..., W_{P1}) \text{ of this input block is}$$

   connected directly via a respective data link (24) to one of the output ports ($Z_1$,..., $Z_{P2}$) of a respective output block ($S_1$,..., $S_{N2}$),

   and **in that** for each switch ($C_1$,..., $C_{N3}$), the first (30) and second (32) input terminals are each connected directly via a respective data link (24) to different input blocks ($E_1$,..., $E_{N1}$) and the first (34) and second (36) output terminals are each connected directly via a respective data link (24) to different output blocks ($S_1$,..., $S_{N2}$).

2. The communication network (18, 118) according to claim 1, wherein, for each switch, the first (30) and second (32) input terminals are connected to the input blocks via one of their input ports ($W_1$,...,$W_{P1}$) and the first (34) and second (36) output terminals are connected to the output blocks via one of their output ports ($Z_1$,..., $Z_{P2}$), and wherein each input port ($W_1$,...,$W_{P1}$) is respectively connected to a single one of the data links (24) and each output port ($Z_1$,..., $Z_{P2}$) is respectively connected to a single one of the data links (24).

3. The communication network according to any one of the preceding claims, wherein the data links (24) are point-to-point physical links.

4. The communication network according to any one of the preceding claims, wherein by numbering the input blocks ($E_1$,..., $E_{N1}$) with a different index j going from 1 to N1 and the output blocks ($S_1$,..., $S_{N2}$) with a different index i going from 1 to N2, with N2 the number of output blocks ($S_1$,..., $S_{N2}$), the communication network (18, 118) respects the following rules for each input block ($E_1$,..., $E_{N1}$) numbered from 1 to N1 considered successively, in order to connect the input blocks ($E_1$,..., $E_{N1}$), the output blocks ($S_1$,..., $S_{N2}$) and the switches ($C_1$,..., $C_{N3}$) to one another via the data links (24):

   - if k, the rest of the Euclidian division of the index j of the input block ($E_J$) by P1 is equal to 1:

     + a first group of P1 switches ($C_1$,..., $C_{N3}$) not connected to input ($E_1$,..., $E_{N1}$) and output ($S_1$,..., $S_{N2}$) blocks is selected,
     + the P1 input ports of the input block ($E_J$) are respectively connected to one of the input terminals of one of the respective switches ($C_1$,..., $C_{N3}$) of the first group,
     + one of the output terminals of the switches ($C_1$,..., $C_{N3}$) of the first group is respectively connected to one of the output ports ($Z_1$,..., $Z_{P2}$) of the output block ($S_1$,..., $S_{N2}$) having an index i equal to the index j of the input block ($E_j$), and
     + the other output terminal P1-1 switches ($C_1$,..., $C_{N3}$) of the first group is respectively connected to one of a respective output block ($S_1$,..., $S_{N2}$) chosen from among P1-1 output blocks having an index i strictly greater than the index j of the input block ($E_j$) and less than or equal to j+P1-1,

- if k, the rest of the Euclidian division of the index j of the input block by P1 is strictly greater than 1:

+ one of the switches ($C_1$,..., $C_{N3}$) having only one of its input terminals free and both of its output terminals respectively connected to a first output block ($S_1$,..., $S_{N2}$) in turn connected to only k-1 switches ($C_1$,..., $C_{N3}$) and a second output block in turn connected to P1 switches is identified,
+ the free input terminal of the identified switch ($C_1$,..., $C_{N3}$) is connected to one of the input ports of the input block ($E_j$),
+ if k > 2, a free input terminal (30, 32) of each of the switches, other than the identified switch, that has one of its output terminals connected to the first output block is connected to one of the input ports of the input block ($E_j$),
+ if k is even, a switch ($C_1$,..., $C_{N3}$) has a single free output terminal and is identified, the free output terminal of the identified switch is then connected to the first output block and one of the input terminals of the identified switch is connected to one of the input ports of the input block ($E_j$),
+ if k is even and k>2, a second group of P1-1-(k-2)-1 switches ($C_1$,..., $C_{N3}$), not connected to input ($E_1$,..., $E_{N1}$) and output ($S_1$,..., $S_{N2}$) blocks is selected, whereas if k is even and k≤2, a second group of P1-2 switches not connected to input and output blocks is selected and if k is odd and k>2, a second group of P1-1-(k-2) which is not connected to input and output blocks is selected and if k is odd and k≤2, a second group of P1-1 switches not connected to input and output blocks is selected, and
+ one of the input terminals (30, 32) of each switch ($C_1$,..., $C_{N3}$) of the second group is respectively connected to one of the input ports ($W_1$,..., $W_{P1}$) of the input block ($E_j$) and one of the output terminals (34, 36) of each switch of the second group is respectively connected to one of the output ports ($Z_1$,..., $Z_{P2}$) of the first output block, and a free output port ($Z_1$,..., $Z_{P2}$) of each output block having only k-1 non-free output ports is respectively connected to one of the free output terminals of the switches ($C_1$,..., $C_{N3}$) of the second group,

- if k, the rest of the Euclidian division of the index j of the input block by P1 is equal to 0:

+ one of the switches ($C_1$,..., $C_{N3}$) having only one free input terminal and both of its output terminals respectively connected to a third output block ($S_1$,..., $S_{N2}$) already in turn connected to P1-1 switches and to a fourth output block ($S_1$,..., $S_{N2}$) in turn already connected to P1 switches is selected,
+ the free input terminal of the selected switch is connected to one of the input ports of the input block ($E_j$),
+ if P1 > 2, a free input terminal (30, 32) of each of the switches (c1,..., $C_{N3}$), other than the selected switch, that has an output terminal (34, 36) connected to the third output block is connected to one of the input ports of the input block ($E_j$),
+ if P1 is even, a switch having a single free input terminal and a single free output terminal has its free input terminal connected to one of the input ports ($W_1$,..., $W_{P1}$) of the input block ($E_j$) and its free output terminal connected to one of the output ports ($Z_1$,..., $Z_{P2}$) of the third output block,
+ if P1 is odd, one of the input ports of the input block ($E_j$) is directly connected to one of the output ports of the third output block.

5. The communication network according to any one of the preceding claims, wherein the communication network (18, 118) comprises a device (40) for detecting downtime of the output blocks ($S_1$,..., $S_{N2}$) and/or switches ($C_1$,..., $C_{N3}$) and a command device (42) able to send each command signal to each switch ($C_1$,..., $C_{N3}$), and wherein the command device (42) comprises a computing unit (44) configured to compute each command signal as a function of the detected downtime.

6. A measuring system (12, 112) in particular for a carrier, such as an aircraft, comprising a plurality of input blocks ($E_1$,..., $E_{N1}$), such as measuring sensors, a plurality of output blocks ($S_1$,..., $S_{N2}$), such as computing members, and a communication network (18, 118) extending between the input blocks ($E_1$,..., $E_{N1}$) and the output blocks ($S_1$,..., $S_{N2}$), wherein the communication network (18, 118) is according to any one of the preceding claims.

7. The measuring system (12, 112) according to claim 6, wherein each input block ($E_1$,..., $E_{N1}$) is able to send, on each input port ($W_1$,..., $W_{P1}$), an input data stream having a predetermined input throughput ($q_1$,..., $q_{N1}$) and each output block ($S_1$,..., $S_{N2}$) is able to receive an output data stream having a maximal output throughput ($Q_1$,..., $Q_{N2}$), and in that for each output block, the associated maximum output throughput ($Q_1$,..., $Q_{N2}$) verifies the inequality $Q_i \geq A \times q_M + R$, with i an index representative of the output block in question, with $q_M$ a maximum of the predetermined input throughputs, A an integer strictly greater than 1 and R a real number strictly less than $q_M$.

8. The measuring system (12, 112) according to claim 7, wherein the predetermined number P1 of input ports

$(W_1,...,W_{P1})$ verifies the following inequality: $P1 \leq A$.

9. A carrier, in particular an aircraft (10), **characterized in that** it comprises a measuring system (12, 112) according to any one of claims 6 to 8.

10. A method for building a communication network extending between a plurality of input blocks ($E_1,..., E_{N1}$) and a plurality of output blocks ($S_1,..., S_{N2}$),
   each input block ($E_1,..., E_{N1}$) comprising a predetermined number P1 of input ports ($W_1,...,W_{P1}$), the predetermined number P1 of input ports being a multiple of the number N1 of input blocks ($E_1,..., E_{N1}$) and being strictly greater than 1,
   each output block ($S_1,..., S_{N2}$) comprising a number P2 of output ports ($Z_1,..., Z_{P2}$) greater than or equal to the predetermined number P1 of input ports,
   the method comprising the following step:

   - providing (104) a plurality of switches ($C_1,..., C_{N3}$), each switch ($C_1,..., C_{N3}$) comprising a first (30) and second (32) input terminals and a first (34) and second (36) output terminals and being able to connect the first (30) and second (32) input terminals, respectively, to first (34) and second (36) output terminals or vice versa, based on a command signal received by the switch, **characterized in that**:
   - if the number of input ports is even, the number N3 of switches provided during the provision step is equal to:

   $$N3 = N1 \times \frac{P1}{2}, \text{ and}$$

   - if the number of input ports is odd, the number N3 of switches provided during the provision step is equal to:

   $$N3 = \frac{N1}{P1} \times \frac{P1^2 - 1}{2},$$

   **in that** when the number of input ports is odd, the method comprises a connecting step (105) during which, for $\dfrac{N1}{P1}$ input blocks, one of the input ports ($W_1,...,W_{P1}$) of this input block is connected directly via a respective data link (24) to one of the output ports ($Z_1,..., Z_{P2}$) of a respective output block,
   and **in that** the method comprises, for each switch ($C_1,..., C_{N3}$), the following steps:

   - the direct connection (106) of the first (30) and second (32) input terminals via a respective data link (24) to different input blocks, and
   - the direct connection (108) of the first (34) and second (36) output terminals via a respective data link (24) to different output blocks.

11. The method according to claim 10, wherein by numbering the input blocks ($E_1,..., E_{N1}$) with a different index j going from 1 to N1 and the output blocks ($S_1,..., S_{N2}$) with a different index i going from 1 to N2, with N2 the number of output blocks, the method comprises, during the linking (105) and connection (106, 108) steps, the following sub-steps carried out for each input block ($E_1,..., E_{N1}$) numbered from 1 to N1 considered successively, in order to connect the input blocks ($E_1,..., E_{N1}$), the output blocks ($S_1,..., S_{N2}$) and the switches ($C_1,..., C_{N3}$) to one another via the data links (24):

   - if k, the rest of the Euclidian division of the index j of the input block by P1 is equal to 1:

     + a first group of P1 switches ($C_1,..., C_{N3}$) not connected to input ($E_1,..., E_{N1}$) and output ($S_1,..., S_{N2}$) blocks is selected,
     + the P1 input ports of the input block are respectively connected to one of the input terminals of one of the respective switches ($C_1,..., C_{N3}$) of the first group,
     + one of the output terminals of the switches ($C_1,..., C_{N3}$) of the first group is respectively connected to one of the output ports ($Z_1,..., Z_{P2}$) of the output block ($S_1,..., S_{N2}$) having an index i equal to the index j of the input block ($E_j$), and
     + the other output terminal P1-1 switches ($C_1,..., C_{N3}$) of the first group is respectively connected to one of a respective output block ($S_1,..., S_{N2}$) chosen from among P1-1 output blocks having an index i strictly greater than the index j of the input block ($E_j$) and less than or equal to j+P1-1,

- if k, the rest of the Euclidian division of the index j of the input block by P1 is strictly greater than 1:

+ one of the switches ($C_1$,..., $C_{N3}$) having only one of its input terminals free and both of its output terminals respectively connected to a first output block ($S_1$,..., $S_{N2}$) in turn connected to only k-1 switches ($C_1$,..., $C_{N3}$) and a second output block in turn connected to P1 switches is identified,
+ the free input terminal of the identified switch ($C_1$,..., $C_{N3}$) is connected to one of the input ports of the input block ($E_j$),
+ if k > 2, a free input terminal (30, 32) of each of the switches, other than the identified switch, that has one of its output terminals connected to the first output block is connected to one of the input ports of the input block ($E_j$),
+ if k is even, a switch ($C_1$,..., $C_{N3}$) has a single free output terminal and is identified, the free output terminal of the identified switch is then connected to the first output block and one of the input terminals of the identified switch is connected to one of the input ports of the input block ($E_j$),
+ if k is even and k>2, a second group of P1-1-(k-2)-1 switches ($C_1$,..., $C_{N3}$), not connected to input ($E_1$,..., $E_{N1}$) and output ($S_1$,..., $S_{N2}$) blocks is selected, whereas if k is even and k≤2, a second group of P1-2 switches not connected to input and output blocks is selected and if k is odd and k>2, a second group of P1-1-(k-2) which is not connected to input and output blocks is selected and if k is odd and k≤2, a second group of P1-1 switches not connected to input and output blocks is selected, and
+ one of the input terminals (30, 32) of each switch ($C_1$,..., $C_{N3}$) of the second group is respectively connected to one of the input ports ($W_1$,..., $W_{P1}$) of the input block ($E_j$) and one of the output terminals (34, 36) of each switch of the second group is respectively connected to one of the output ports ($Z_1$,..., $Z_{P2}$) of the first output block, and a free output port ($Z1$,..., $Z_{P2}$) of each output block having only k-1 non-free output ports is respectively connected to one of the free output terminals of the switches ($C_1$,..., $C_{N3}$) of the second group,

- if k, the rest of the Euclidian division of the index j of the input block by P1 is equal to 0:

+ one of the switches ($C_1$,..., $C_{N3}$) having only one free input terminal and both of its output terminals respectively connected to a third output block ($S_1$,..., $S_{N2}$) already in turn connected to P1-1 switches and to a fourth output block ($S_1$,..., $S_{N2}$) in turn already connected to P1 switches is selected,
+ the free input terminal of the selected switch is connected to one of the input ports of the input block ($E_j$),
+ if P1 > 2, a free input terminal (30, 32) of each of the switches (c1,..., $C_{N3}$), other than the selected switch, that has an output terminal (34, 36) connected to the third output block is connected to one of the input ports of the input block ($E_j$),
+ if P1 is even, a switch having a single free input terminal and a single free output terminal has its free input terminal connected to one of the input ports ($W_1$,..., $W_{P1}$) of the input block ($E_j$) and its free output terminal connected to one of the output ports ($Z_1$,..., $Z_{P2}$) of the third output block,
+ if P1 is odd, one of the input ports of the input block ($E_j$) is directly connected to one of the output ports of the third output block.

FIG.1

FIG.2

FIG.3

## FIG.4

FIG.5

**FIG.6**

```
┌─────────────────────────────┐
│           -102-             │
└─────────────────────────────┘
              │
              ▼
┌─────────────────────────────┐
│           -104-             │
└─────────────────────────────┘
              │
              ▼
┌─────────────────────────────┐
│           -105-             │
└─────────────────────────────┘
              │
              ▼
┌─────────────────────────────┐
│           -106-             │
└─────────────────────────────┘
              │
              ▼
┌─────────────────────────────┐
│           -108-             │
└─────────────────────────────┘
              │
              ▼
┌─────────────────────────────┐
│           -110-             │
└─────────────────────────────┘
```

## FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. BUCKLEY.** New monitoring paradigms for modem avionics buses. *Congrès International de Télémétrie,* 2013

- **B. GERY.** A flexible switching architecture for diverse signal types. *Congrès International de Télémétrie,* 2007